# EUROPÄISCHE PATENTSCHRIFT

(11) **EP 1 156 445 B1**
(45) Veröffentlichungstag und Bekanntmachung des Hinweises auf die Patenterteilung: **09.08.2006**
(21) Anmeldenummer: 01112151.4
(22) Anmeldetag: 17.05.2001
(51) Int. Cl.: G06K 9/46, G06K 9/32, G06K 9/20, H04N 1/031

(54) **Verfahren zur Erkennung von Objekten und Digitalkamera hierfür**
Object recognition method and digital camera using that method
Méthode de reconnaissance d'objet et caméra numérique utilisant cette méthode

(30) Priorität: 18.05.2000 DE 10024559; 18.05.2000 DE 20008999 U
(43) Veröffentlichungstag der Anmeldung: 21.11.2001
(73) Patentinhaber: Optigraf Aktiengesellschaft, Vaduz, succursale di Paradiso, 6900 Lugano Paradiso (CH)
(72) Erfinder: Krabb, Helmut, 5760 Saalfelden (AT)
(74) Vertreter: Solf, Alexander

(56) Entgegenhaltungen:
- WO-A-99/23293
- US-A- 4 471 384
- US-A- 4 805 224
- US-A- 4 878 248
- PERSOON E H J: "A system that can learn to recognize two-dimensional shapes" PHILIPS TECHNICAL REVIEW, 1978-1979, NETHERLANDS, Bd. 38, Nr. 11-12, 1978, Seiten 356-363, XP002271787 ISSN: 0031-7926

## Beschreibung

Die Erfindung betrifft ein Verfahren zur Erkennung von ruhenden oder bewegten Objekten wie Bildern, Texten oder Gegenständen.

Die Erfindung betrifft ferner eine Digitalkamera insbesondere für die Bildverarbeitung in einer industriellen Umgebung.

Eine Reihe von beispielsweise industriellen Anwendungen erfordert die Erkennung von Objekten, welche in unterschiedlichen Positionen innerhalb eines Beobachtungsfensters angeordnet sein können. So müssen in der grafischen Industrie im Bereich von Sammellinien oder Zusammentraglinien für Druckbögen schlecht gefalzte oder falsche Druckbögen sicher erkannt und entfernt werden. Die Erkennung schlecht gefalzter oder falscher Drackbögen wird dadurch erschwert, daß sich die einzelnen Druckbögen ständig sowohl in Sammel- oder Zusammentragrichtung als auch senkrecht dazu bewegen und daß aufeinanderfolgende Druckbögen selten vollständig bündig zueinander ausgerichtet sind. Um trotzdem ein sicheres Erkennen von schlecht gefalzten oder falschen Druckbögen zu ermöglichen, sind komplexe und teure Bearbeitungssysteme erforderlich, welche hohe Rechenleistungen benötigen.

Ähnlich gelagerte Problematiken bestehen beispielsweise bei der lagerichtigen Zuführung von zu montierenden Teilen in Fertigungslinien oder bei der oftmals nur visuell durchzuführenden Füllstandskontrolle in der Verpackungsindustrie.

Verfahren zur Erkennung von ruhenden oder bewegten Objekten der im Oberbegriff des Anspruchs 1 genannten Art ist aus der US-A-4,805,224 bekannt.

Aus der Us-A-4,878,248 sind ein Verfahren und eine Vorrichtung zum automatischen Erkennen der Buchstaben und Zahlen eines amtlichen Kfz-Kennzeichens bekannt. Eine Sensor-/Kontrollervorrichtung wird dazu verwendet, zu ermitteln, ob das Fahrzeug eine vorbestimmte Position zur Bilderfassung erreicht hat, und um ein Auslösesignal abzugeben, wenn das Fahrzeug die vorbestimmte Position erreicht hat. Eine Bildverarbeitungseinheit ist mit der Sensor-/Controllervorrichtung verbunden, um das Auslösesignal zu empfangen und daraufhin eine Bilderfassungsinstruktion an eine Bilderfassungseinrichtung zu senden. Die Bilderfassungseinrichtung ist mit der Bildverarbeitungseinheit verbunden und erfasst ein Fahrzeugbild, einschließlich das Bild des Kfz-Kennzeichens in Reaktion auf die Bilderfassungsinstruktion. Das Fahrzeugbild wird in ein elektrisches Signal durch die Bilderfassungseinrichtung gewandelt, die es ihrerseits zu der Bildverarbeitungseinheit zurückleitet. Die Bildverarbeitungseinheit digitalisiert das elektrische Signal und verarbeitet dieses zur Erfassung der Position des Kfz-Kennzeichens, um die Ränder der Buchstaben und Zahlen hierauf zu erfassen, um jede Zahl und jeden Buchstaben voneinander zu trennen und die getrennten Buchstaben und Zahlen zu erkennen.

Der Erfindung liegt die Aufgabe zugrunde, ein Verfahren anzugeben, welches die sichere Erkennung von in unterschiedlichen Positionen innerhalb eines Beobachtungsfensters angeordneten, ruhenden oder bewegten Objekten gestattet, ohne daß die für die Erkennung erforderliche Rechenleistung übermäßig ansteigt.

Diese Aufgabe wird Übereinstimmung mit den Merkmalen des Anspruchs 1 mit anderen Worten durch ein Verfahren gelöst, bei dem zunächst eine zu erlernende, digitale Darstellung des Objektes oder eines Teiles des Objektes bereitgestellt wird. Im Anschluß daran wird innerhalb der zu erlernenden Darstellung oder innerhalb eines Ausschnittes der zu erlernenden Darstellung ein Suchfenster ausgewählt, welches innerhalb der zu erlernenden Darstellung oder innerhalb des Ausschnittes nur einmal vorkommt. Daraufhin werden einer oder mehrere Suchausschnitte innerhalb des Suchfensters ausgewählt, welche die Grundlage für die Objekterkennung bilden.

Die Objekterkennung kann im Anschluß an die Auswahl des mindestens einen Suchausschnittes beispielsweise derart erfolgen, daß innerhalb einer auszuwertenden, digitalen Darstellung nach einem Muster gesucht wird, welches bezüglich Inhalt und geometrischer Gestalt dem anhand der zu erlernenden Darstellung ermittelten Suchausschnitt am entspricht. Die auszuwertende Darstellung fungiert dabei als Beobachtungsfenster, innerhalb dessen das zu erkennende Objekt oder ein Teil des zu erkennenden Objekts in unterschiedlichen Positionen angeordnet sein kann.

Der Erfindung liegt ferner die Aufgabe zugrunde, eine Digital-kamera mit Austrerkennungsmitten zur furchführung des erfindungsgemäßen Verfahrens insbesondere für industrielle Anwendungen anzugeben, dei eine gute Aufnahmequalität besitzt.

Diese Aufgabe wird gelöst durch eine Digitalkamera mit der Merkmalen des Anspruchs 16 gelöst.

Es hat sich herausgestellt, daß eine grüne Beleuchtung des Aufnahmebereichs im Gegensatz zur Beleuchtung mit weißem Licht insbesondere die monochrome Weiterverarbeitung farbiger Objekte wie Bilder, Texte oder Gegenstände erleichtert. Vor allem der Kontrast farbiger Übergänge im Rotbereich oder im Schwarzbereich verbessert sich bei einer grünen Ausleuchtung des Aufnahmebereiches deutlich.

Gemäß einer bevorzugten Ausführungsform ist die Lichtquelle innerhalb des Gehäuses angeordnet, um eine mechanische Beschädigung der Lichtquelle im rauhen industriellen Umfeld auszuschließen. Um eine gleichmäßige Ausleuchtung des Aufnahmebereichs zu erzielen, kann die Lichtquelle als diffuse Lichtquelle ausgestaltet sein. Die Lichtquelle kann eine ringförmige oder eine rechteckige Ausdehnung aufweisen. So ist es denkbar, daß die Lichtquelle das Aufnahmesystem ringförmig umgibt. Als Lichtquelle wird vorzugsweise eine LED oder ein LED-Array eingesetzt. Zur Verringerung von Reflexionen kann es vorteilhaft sein, die Lichtquelle geneigt zur Aufnahmeebene anzuordnen.

Das Aufnahmesystem der Digitalkamera umfaßt vorzugsweise eine digitale Aufnahmeeinheit mit beispielsweise einem CMOS-Bildsensor oder einem CCD-Bildsensor. Da derartige Bildsensoren oftmals eine hohe Rotempfindlichkeit aufweisen, können durch eine Beleuchtung des Aufnahmebereiches mit der Farbe Grün besonders vorteilhafte Ergebnisse in Bezug auf die Qualität des aufgenommenen Bildes erzielt werden.

Das digitale Aufnahmesystem kann weiterhin einen digitalen Signalprozessor umfassen, welcher beispielsweise die Steuerung der Belichtungszeiten oder der Lichtquelle ermöglicht.

Auch eine Abbildungsoptik kann Teil des digitalen Aufnahmesystems sein. Die Abbildungsoptik ist bevorzugt innerhalb eines mit einem Außengewinde versehenen Rohres angeordnet. Zur Fokussierung wirkt das Rohr über dieses Außengewinde z.B. mit einem komplementären Innengewinde des Gehäuses zusammen.

Die erfindungsgemäße Digitalkamera ist vorzugsweise Teil eines Systemes zur Erkennung bewegter Objekte wie Bilder, Texte oder Gegenstände. Das System umfaßt weiterhin eine digitale Bildverarbeitungseinheit, um die von der Kamera aufgenommenen Bildsignale im Hinblick auf deren Inhalt auszuwerten. Der Abstand zwischen der Kamera und dem aufzunehmenden Objekt beträgt vorzugsweise weniger als 5 cm.

Gemäß einer bevorzugten Ausführungsform umfaßt das System weiterhin eine Fördervorrichtung, um die Objekte, welche erkannt werden sollen, an der Kamera vorbeizubewegen. Die Fördervorrichtung ist vorzugsweise zum Fördern planarer Objekte wie beispielsweise Druckbögen ausgestaltet.

Das System kann zwei oder mehr Digitalkameras umfassen. Diese Kameras können auf unterschiedliche Bereiche desselben Objektes ausgerichtet sein, um die Zuverlässigkeit der Erkennung zu erhöhen. Weiterhin ist es möglich, die Kameras auf unterschiedliche Objekte, beispielsweise verschiedene Stationen einer Sammel- oder Zusammentraglinie für Druckbögen, auszurichten.

Bei dem erfindungsgemäßen Verfahren wird vorteilhafterweise der meiste Rechenaufwand im Vorfeld der eigentlichen Objekterkennung auf das Auffinden eines oder mehrerer zuverlässiger Suchausschnitte verwendet, so daß die Erkennung des Objektes aufgrund der geringen Datenmenge des Suchausschnittes äußerst schnell erfolgen kann. Aufgrund des reduzierten Rechenaufwands für die Objekterkennung kann insbesondere die Echtzeitfähigkeit des erfindungsgemäßen Verfahrens gewährleistet werden.

Zur Reduzierung des Rechenaufwandes bei der Auswertung einer das zu erkennende Objekt möglicherweise enthaltenden Darstellung wird in einem ersten Schritt innerhalb der zu erlernenden Darstellung des zu erkennenden Objektes oder eines Ausschnittes hiervon ein verkleinertes, charakteristisches Suchfenster ermittelt. Mit dieser Ermittlung des charakteristischen Suchfensters geht eine erste Reduzierung der für die Objekterkennung auszuwertenden Datenmenge einher. In einem zweiten Schritt wird dieses Suchfenster auf einen Suchausschnitt mit einer bestimmten geometrischen Struktur wie beispielsweise ein Kreuz, ein Ring oder eine Gerade verkleinert. Das Verkleinern des

Suchfensters auf den Suchausschnitt geschieht hier derart, daß nur bestimmte Bereiche innerhalb des Suchfensters als Suchausschnitt herangezogen werden. Der Suchausschnitt weist damit vorteilhafterweise eine gegenüber dem Suchfenster nochmals reduzierte Datenmenge auf.

Zur sicheren Erkennung, ob das zu erfassende Objekt in einer auszuwertenden Darstellung enthalten ist, braucht gemäß einer Ausführungsform der Erfindung daher nur noch festgestellt werden, ob der anhand der zu erlernenden Darstellung ermittelte Suchausschnitt als Muster innerhalb der auszuwertenden Darstellung enthalten ist oder nicht. Aufgrund der geringen Datenmenge des Suchausschnittes und dessen hohen Maßes an Charakteristizität für das zu erfassende Objekt kann die Erkennung schnell und mit großer Sicherheit erfolgen.

Innerhalb des Suchfensters können einer oder mehrere Suchausschnitte ausgewählt werden. Die Position jedes Suchausschnittes innerhalb des Suchfensters und die geometrische Gestalt jedes Suchausschnittes können unabhängig vom Inhalt des Suchfensters fest vorgegeben werden oder aber dynamisch in Abhängigkeit vom Inhalt des Suchfensters festgelegt werden. Eine dynamische Auswahl der Position eines Suchausschnittes oder der geometrischen Gestalt des Suchausschnittes kann bei vorgegebenem Inhalt des Suchfensters beispielsweise derart erfolgen, daß der Suchausschnitt eine bestimmte, vorgegebene Markanz aufweisen muß.

Erfindungsgemäß ist die Markanz beispielsweise eines Suchfensters oder eines Suchausschnittes durch die Anzahl vorhandener unterschiedlicher Pixelinhalte und deren Häufigkeitsverteilung charakterisiert. Eine hohe Markanz ist dann gegeben, wenn möglichst viele unterschiedliche Pixelinhalte vorhanden sind und die unterschiedlichen Pixelinhalte mit ungefähr jeweils derselben Häufigkeit auftreten. Eine Binärdarstellung beispielsweise, welche lediglich schwarze und weiße Pixel umfaßt, ist dann optimal markant, wenn die eine Hälfte der Pixel schwarz und die andere Hälfte der Pixel weiß ist. Bei einer dynamischen Auswahl beispielsweise der Position des Suchausschnittes wird dieser folglich derart innerhalb des Suchfensters plaziert, daß der Suchausschnitt möglichst viele unterschiedliche Pixelinhalte umfaßt, welche jeweils mit ungefähr der gleichen Häufigkeit auftreten.

Die geometrische Gestalt des Suchfensters und des Suchausschnittes sind frei wählbar. So können das Suchfenster als Rechteck und der Suchausschnitt als Gerade oder als Ring ausgebildet sein. Vorzugsweise weist der Suchausschnitt eine lineare Gestalt auf, da die Ermittlung eines derartigen Suchausschnittes innerhalb der zu erlernenden Darstellung bzw. eines korrespondierenden Musters innerhalb der auszuwertenden Darstellung den geringsten Rechenaufwand erfordert. So können beispielsweise zwei Suchausschnitte verwendet werden, welche als senkrecht zueinander verlaufende Geraden ausgebildet sind und deren Position innerhalb des Suchfensters dynamisch festgelegt wird.

Gemäß einer bevorzugten Ausführungsform wird innerhalb der zu erlernenden, digitalen Darstellung des Objektes zunächst ein im voraus festgelegter Vergleichsausschnitt ausgewählt und innerhalb dieses Vergleichsausschnittes ein charakteristisches Suchfenster ermittelt. Nach der Auswahl eines Suchausschnittes innerhalb des Suchfensters werden die Inhalte des Suchausschnittes und des Vergleichsausschnittes der zu erlernenden Darstellung, innerhalb dessen der Suchausschnitt ermittelt wurde, sowie die relative Lage des Suchausschnittes oder des Suchfensters innerhalb dieses Vergleichsausschnittes abgespeichert. Nachfolgend kann innerhalb einer auszuwertenden Darstellung nach einem dem Suchausschnitt am ehesten entsprechenden Muster gesucht werden.

Auf der Grundlage des dem Suchausschnitt am ehesten entsprechenden Musters kann dann innerhalb der auszuwertenden Darstellung ein Vergleichsausschnitt ermittelt werden, dessen Lage relativ zum gefundenen Muster mit der Lage des Vergleichsausschnittes der zu erlernenden Darstellung relativ zum erlernten Suchausschnitt übereinstimmt. Im Anschluß daran wird der Inhalt des Vergleichsausschnittes der zu erlernenden Darstellung mit dem Inhalt des Vergleichsausschnittes der auszuwertenden Darstellung verglichen. Sollten die beiden Vergleichsausschnitte bis auf eine einstellbare Abweichung übereinstimmen, steht als Ergebnis der Objekterkennung fest, daß das zu erkennende Objekt innerhalb der auszuwertenden Darstellung aufgefunden wurde.

Die Zuverlässigkeit der Objekterkennung wird folglich dadurch gesteigert, daß im Falle des Auffindens eines dem erlernten Suchausschnitt entsprechenden Musters innerhalb der auszuwertenden Darstellung überprüft wird, ob an den erlernten Suchausschnitt und das aufgefundene Muster angrenzende Bereiche in Gestalt von Vergleichsausschnitten übereinstimmen. Gemäß der beschriebenen Ausführungsform bestimmt folglich nicht die Übereinstimmung des erlernten Suchausschnittes mit dem oftmals verrauschten Muster das Ergebnis der Objekterkennung, sondern die Übereinstimmung der beiden korrespondierenden Vergleichsausschnitte. Durch diese Maßnahme wird gewährleistet, daß ein Objekt auch dann noch sicher in einer auszuwertenden Darstellung erkannt wird, wenn es im Vergleich zur erlernten Darstellung etwas verdreht ist. Bei herkömmlichen Objekterkennungsverfahren hingegen ist die Erkennung von gegenüber einer erlernten Darstellung verdrehten Objekten nicht oder nur mit sehr großem, eine Echtzeiterkennung ausschließenden Rechenaufwand möglich.

Vorzugsweise wird die zu erlernende Darstellung des zu erkennenden Objektes vor der Auswahl eines Suchfensters einer Aufbereitung unterzogen. Auch die auszuwertende Darstellung, innerhalb welcher nach dem zu erkennenden Objekt gesucht wird, kann einer entsprechenden Aufbereitung unterzogen werden. Insbesondere bei solchen digitalen Darstellungen, welche beispielsweise aus digitalisierten Videoaufnahmen generiert wurden, ist eine Aufbereitung in der Regel zweckmäßig.

Die Aufbereitung der Darstellung kann unterschiedliche Maßnahmen beinhalten. So kann beispielsweise im Falle einer monochromen Darstellung dieser einer Grauwertmanipulation unterzogen werden. Im Falle geringer Kontraste kann so z.B. durch eine Grauwertspreizung, welche die zur Verfügung stehende Anzahl unterschiedlicher Grauwerte voll ausnutzt, eine deutliche Verbesserung der Erkennungswahrscheinlichkeit erzielt werden.

Die Zuverlässigkeit des erfindungsgemäßen Erkennungsverfahrens kann durch eine Glättung der digitalen Darstellung weiter verbessert werden. So läßt sich beispielsweise durch eine Binominalfilterung das bei digitalisierten Videoaufnahmen vorhandene Zeilen- und Quantisierungsrauschen deutlich abschwächen.

Vorteilhafterweise wird die zu erlernende oder die auszuwertende digitale Darstellung einer Kantenextraktion unterzogen, durch welche in homogenen Bildern enthaltene Farb- oder Grauwertübergänge als Kanten erfaßt werden. Vorzugsweise erfolgt eine derartige Aufbereitung der digitalen Darstellung mit Hilfe eines modifizierten Kantenoperators nach Prewitt.

Eine weitere Steigerung der Erkennungssicherheit läßt sich durch Binärisieren der digitalen Darstellung erreichen. Bei der Binärisierung wird mit Hilfe eines vorab festgelegten Schwellenwertes aus der beispielsweise eine Vielzahl von Grautönen umfassenden digitalen Darstellung eine Schwarz-Weiß-Darstellung generiert.

Die vorstehend beschriebenen Schritte zur Aufbereitung der zu erlernenden oder auszuwertenden digitalen Darstellung können in beliebiger Weise kombiniert werden.

Gemäß einer bevorzugten Ausführungsform werden von der auszuwertenden und von der erlernenden Darstellung Histogramme erstellt, welche die Häufigkeit der auftretenden Pixelinhalte wiedergeben. Sollte es einmal nicht möglich sein, einen Suchausschnitt auszuwählen, können diese Histogramme zur Objekterkennung herangezogen werden.

Weitere Einzelheiten und Vorteile der Erfindung ergeben sich aus der Beschreibung eines bevorzugten Ausführungsbeispieles und den Figuren. Es zeigen:
- Fig. 1 bis 5:: Schematische Flußdiagramme des erfindungsgemäßen Verfahrens zur Erkennung von Objekten;
- Fig. 6 bis 10:: die Aufbereitung einer zu erlernenden, digitalen Darstellung des zu erkennenden Objektes;
- Fig. 11 bis 13:: die Auswahl eines Suchfensters innerhalb der zu erlernenden Darstellung und die Auswahl eines Suchausschnittes innerhalb des Suchfensters; und
- Fig. 14 und 15:: die Erkennung eines Objektes innerhalb einer auszuwertenden Darstellung.
- Fig. 16: das Gehäuse einer erfindungsgemäßen Digitalkamera;
- Fig. 17: eine Schnittdarszellung des Gehäuses von Fig. 1 mit eingebauten Komponenten; und
- Fig. 18: eine schematische Darstellung einer Lichtquelle.

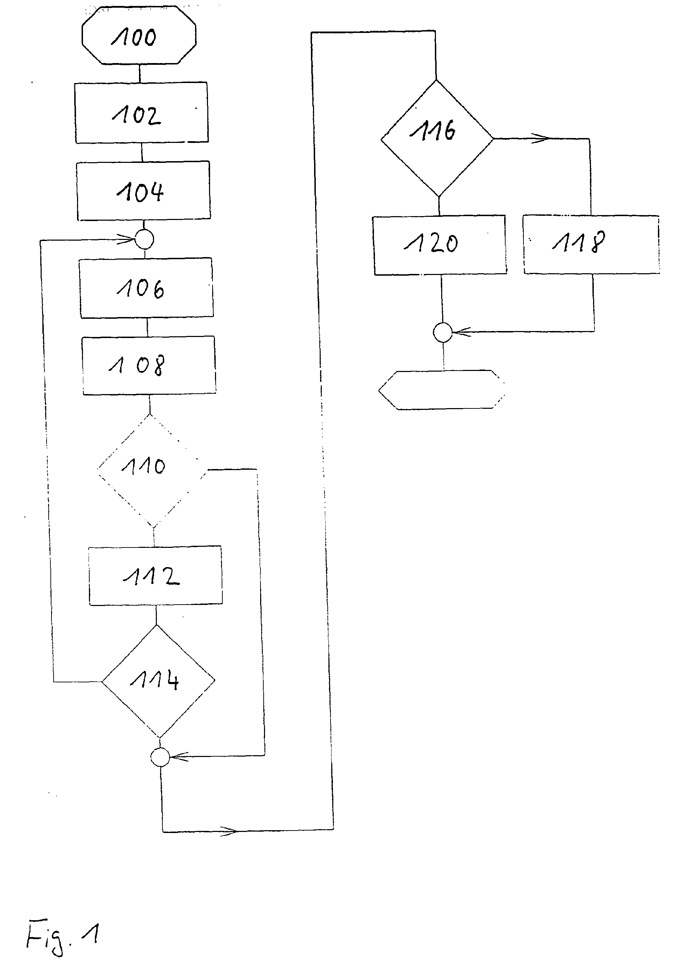

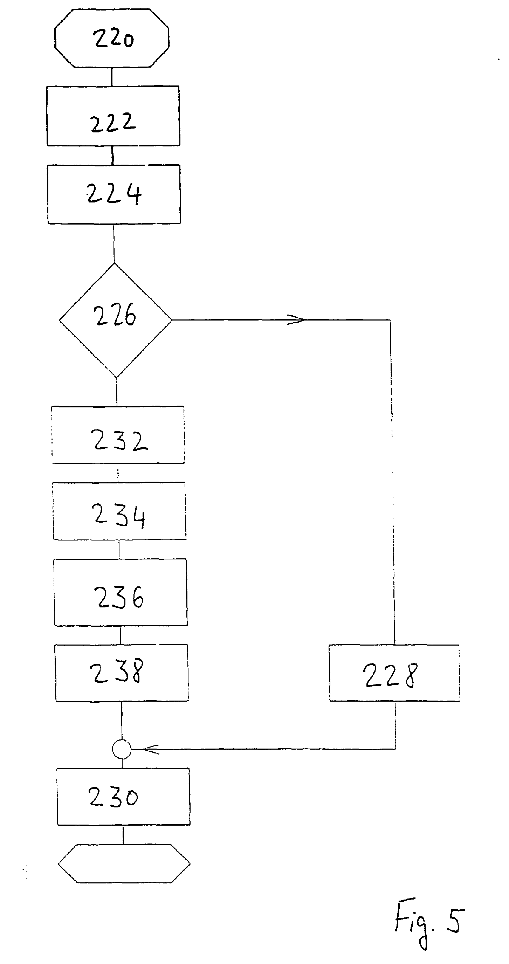

In den Figuren 1 bis 5 ist in Form von Flußdiagrammen ein schematisches Ausführungsbeispiel eines erfindungsgemäßen Verfahrens zur Erkennung von Objekten dargestellt. Die Figuren 1 bis 4 zeigen die Auswahl eines Suchfensters und eines Suchausschnittes auf der Grundlage einer zu erlernenden, digitalen Darstellung des Objektes und in der Figur 5 ist der Vorgang des Suchens nach dem zu erkennenden Objekt innerhalb einer auszuwertenden Darstellung skizziert.

In Fig. 1 ist der Vorgang 100 der Auswertung einer zu erlernenden Darstellung im Hinblick auf die Fragestellung, ob innerhalb der zu erlernenden Darstellung ein markanter, rauschfreier Suchausschnitt vorhanden ist, dargestellt.

In einem ersten Schritt 102 wird von einer Aufnahmevorrichtung in Gestalt einer Kamera eine analoge Darstellung eines Ausschnittes des zu erkennenden Objektes aufgenommen. Ein Framegrabber eines digitalen Signalprozessors stellt diese analoge Aufnahme dann in Gestalt einer monochromen digitalen Darstellung einer Weiterverarbeitung mit Hilfe einer Datenverarbeitungsanlage zur Verfügung. Anstelle einer analogen Kamera und eines Framegrabbers könnte auch eine Digitalkamera verwendet werden, welche unmittelbar eine digitale Darstellung erstellt.

In einem nachfolgenden Schritt 104 wird diese monochrome Darstellung eines Ausschnittes des zu erkennenden Objektes einer Grauwertmanipulation unterzogen. Dabei werden zunächst der minimale und der maximale Grauwert ermittelt, welche in der zu erlernenden, monochromen Darstellung auftreten. Im Anschluß daran wird zur Verbesserung des Kontrastes der zu erlernenden Darstellung eine lineare Grauwertspreizung durchgeführt. Kommen innerhalb der zu erlernenden Darstellung beispielsweise auf einer Grauwertskala von 0 bis 255 nur Grauwerte von 7 bis 54 vor, so werden ausgehend von dieser ursprünglichen Grauwertdarstellung drei weitere Grauwertdarstellungen mit linearen Grauwertspreizungen von beispielsweise 0 bis 63, 0 bis 127 und 0 bis 255 generiert. Anschließend wird eine Tabelle (Look-up-Table) angelegt, in welcher für jedes Pixel der zu erlernenden Darstellung der ursprüngliche und die drei gespreizten Grauwerte enthalten sind. Diese Tabelle umfaßt folglich verschiedene Grauwertdarstellungen der von der Digitalkamera aufgenommenen Aufnahme.

Anschließend wird in Schritt 106 die aktuell zu bearbeitende Grauwertdarstellung geladen.

In Schritt 108 erfolgt daraufhin eine Klassifikation der Grauwertdarstellungen dahingehend, ob sie einen Suchausschnitt von ausreichender Markanz enthalten. Dazu erfolgt in einem ersten Schritt eine Aufbereitung der geladenen Grauwertdarstellung, um die Suche nach einem charakteristischen Suchfenster und einem markanten Suchausschnitt zu erleichtern.

In Schritt 108 wird in mehreren Durchläufen und bei verschiedenen Aufbereitungsparametern nach einem charakteristischen Suchfenster und einem darin enthaltenen, markanten Suchausschnitt gesucht. Sollte sich herausstellen, daß die aktuell geladene Grauwertdarstellung nicht markant genug ist, um ein Suchfenster oder einen Suchausschnitt ermitteln zu können, so wird die Grauwertdarstellung als uniform hellig keit aufweisend klassifiziert. Sofern jedoch sowohl ein charakteristisches Suchfenster als auch ein darin enthaltener, markanter Suchausschnitt gefunden werden können, erfolgt eine Überprüfung der aktuellen Grauwertdarstellung auf Rauschen. Dazu wird bei den zuletzt eingestellten Aufbereitungsparametern in der aktuellen Grauwertdarstellung mehrmals der Inhalt des Suchausschnittes an identischen Positionen ermittelt. Sofern die jeweils ermittelten Suchausschnittsinhalte stärkere Abweichungen aufweisen, wird die Grauwertdarstellung als verrauscht klassifiziert.

Im Anschluß daran erfolgt in Schritt 110 eine Überprüfung der aktuellen Grauwertdarstellung dahingehend, ob sie als monochrom oder verrauscht klassifiziert wurde. Sollte dies der Fall sein, so werden in Schritt 112 entweder die Aufbereitungsparameter geändert oder es wird, falls alle Aufbereitungsparameter bereits durchlaufen sind, die nächste Grauwertdarstellung aus der in Schritt 104 angelegten Tabelle festgelegt. Daraufhin wird wieder bei Schritt 106 fortgefahren, sofern nicht in Schritt 114 festgestellt wird, daß alle Aufbereitungsparameter und alle Grauwertdarstellungen bereits durchlaufen sind.

Sollte sich in Schritt 110 herausstellen, daß die aktuelle Grauwertdarstellung weder monochrom noch verrauscht ist, oder sollte sich in Schritt 114 herausstellen, daß bereits alle Grauwertdarstellungen und alle möglichen Aufbereitungsparameter abgearbeitet wurden, so wird in Schritt 116 überprüft, ob für die zu erlernende Darstellung ein markanter Suchausschnitt festgelegt werden konnte. Sollte dies nicht der Fall sein, so wird in Schritt 118 ein zentraler Bereich der zu erlernenden Darstellung als Vergleichsausschnitts festgelegt und dieser mit Hilfe eines Grauwert-Histogrammes bewertet. Dieses Grauwert-Histogramm wird abgespeichert und bildet nachfolgend die Grundlage für die Objekterkennung in einer auszuwertenden Darstellung. Die Objekterkennung unter Zuhilfenahme von Grauwert-Histogrammen wird weiter unten unter Bezugnahme auf Fig. 5 näher beschrieben.

Sollte sich jedoch in Schritt 116 herausstellen, daß die zu erlernende Darstellung die Ermittlung eines markanten Suchausschnittes ermöglicht, so werden in Schritt 120 die Koordinaten und der Inhalt des Suchausschnittes sowie der Inhalt eines den Suchausschnitt enthaltenden Vergleichsausschnittes, der innerhalb der zu erlernenden Darstellung festgelegt wird, abgespeichert. Außerdem werden die Tabelle mit den Grauwertdarstellungen und sowie die verwendeten Aufbereitungsparameter wie Kantendivisor und Binärisierungschwelle abgespeichert.

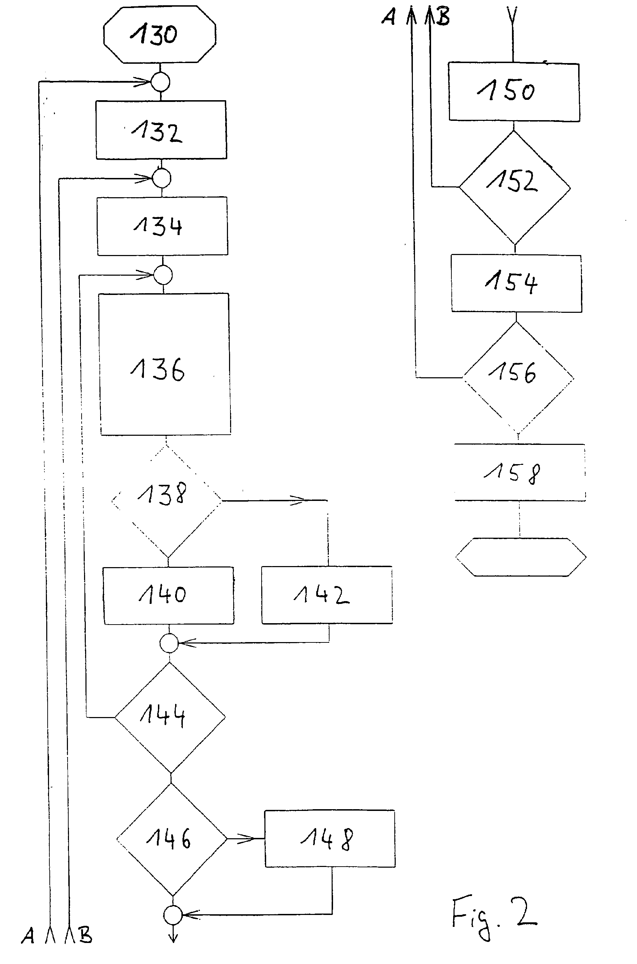

Im Anschluß an den Schritt 118 oder den Schritt 120 ist der Vorgang 100 der Auswertung der zu erlernenden Darstellung hinsichtlich der Frage, ob ein markanter, rauschfreier Suchausschnitt innerhalb der zu erlernenden Darstellung enthalten ist, beendet. Auszuwertende Darstellungen können jetzt unter Zuhilfenahme entweder des abgespeicherten Suchausschnittes oder des abgespeicherten Histogrammes im Hinblick darauf untersucht werden, ob sie das zu erkennende Objekt enthalten oder nicht. Dieser Vorgang wird weiter unten unter Bezugnahme auf Fig. 5 beschrieben. Zunächst wird jedoch anhand von Fig. 2 der Vorgang 130 des Klassifizierens der auszuwertenden Darstellung näher erläutert. Dies Vorgang 130 entspricht im wesentlichen den Schritten 106 bis 120 von Fig. 1.

Zunächst wird in Schritt 132 die aktuell aus der Tabelle zu ladende Grauwertdarstellung der zu erlernenden Darstellung festgelegt. Daraufhin wird eine Schwelle für die Binärisierung der auszuwertenden Darstellung auf einen Anfangswert gesetzt.

Anschließend wird in Schritt 134 ein Kantendivisor für die Kantenextrahierung auf einen Anfangswert gesetzt. Der Kantendivisor gibt an, bei welchem Grauwert im Bereich eines Grauwert-überganges eine Kante festgelegt wird. Je nach Wert des Kantendivisors verschiebt sich die Kante in Richtung auf hellere oder dunklere Grautöne. Bei der Kantenextrahierung wird auf den modifizierten Kantenoperator nach Prewitt zurückgegriffen.

In einem sich anschließenden Schritt 136 wird zunächst die aktuelle Grauwertdarstellung geladen. Daraufhin wird die aktuelle Grauwertdarstellung einer Glättung durch Binominalfilterung unterzogen. Dann wird in der auszuwertenden Grauwertdarstellung ein zentraler Vergleichsausschnitt festgelegt, innerhalb dessen später das Suchfenster ermittelt wird.

In Schritt 136 wird weiterhin von diesem Vergleichsausschnitt, welcher eine geringere Abmessung und folglich auch eine geringere Datenmenge als die aktuelle Grauwertdarstellung aufweist, ein Histogramm erstellt, welches die Grauwertverteilung des Vergleichsausschnittes angibt.

Daraufhin wird in Schritt 136 der aktuelle Wert des Kantendivisors halbiert und der Vergleichsausschnitt einer Kantenextrahierung unterzogen. Im Anschluß an die Kantenextrahierung wird der Vergleichsausschnitt auf der Basis der aktuellen Binärisierungsschwelle in eine Binärdarstellung gewandelt. In dieser Binärdarstellung nimmt jedes der Pixel des Vergleichsausschnittes in Abhängigkeit vom Wert der Binärisierungsschwelle einen von zwei möglichen Werten an. Nachfolgend werden diese beiden Werte zur Veranschaulichung als "schwarz" und "weiß" bezeichnet. Abschließend wird in Schritt 136 das Verhältnis von schwarzen zu weißen Pixeln innerhalb des Vergleichsausschnittes berechnet.

In Schritt 138 wird überprüft, ob der aktuelle Vergleichsausschnitt eine ausreichend hohe Markanz aufweist. Bei dieser Überprüfung wird festgestellt, ob das in Schritt 136 ermittelte Verhältnis von schwarzen zu weißen Pixeln innerhalb eines einstellbaren Toleranzbereiches um den Optimalwert 0,5 liegt. Sollte die Markanz des aktuellen Vergleichsausschnittes ausreichend hoch sein, so wird in Schritt 140 nach einem charakteristischen Suchfenster innerhalb des aktuellen Vergleichsausschnittes und nach einem markanten Suchausschnitt innerhalb des ermittelten Suchfensters gesucht. Andernfalls erfolgt in Schritt 142 eine Klassifizierung des Vergleichsausschnittes als monochrom.

Im Anschluß an die Suche nach einem markanten Suchausschnitt in Schritt 140 oder an die Klassifizierung des Vergleichsausschnittes als monochrom in Schritt 142 wird in Schritt 144 überprüft, ob ein markanter Suchausschnitt gefunden wurde oder ob der Kantendivisor seinen niedrigstmöglichen Wert annimmt. Sollte diese Überprüfung negativ verlaufen, so wird ab Schritt 136 nochmals eine Schleife mit halbiertem Kantendivisor aber sonst unveränderten Einstellungen durchlaufen.

Sollte hingegen in Schritt 144 festgestellt werden, daß ein markanter Suchausschnitt gefunden wurde oder daß der Kantendivisor seinen niedrigstmöglichen Wert annimmt, so wird in Schritt 146 überprüft, ob in Schritt 140 ein markanter Suchausschnitt gefunden wurde. Sollte dies der Fall sein, so wird in Schritt 148 dieser Suchausschnitt auf Rauschen getestet. Zu diesem Zweck wird bei den aktuellen Aufbereitungsparametern (Binärisierungsschwelle und Kantendivisor) in der aktuellen Grauwertdarstellung mehrmals der Inhalt eines an identischen Positionen angeordneten Suchausschnittes untersucht. Sofern die Inhalte der an identischen Positionen angeordneten Suchausschnitte keine größeren Abweichungen aufweisen, wird der gefundene Suchausschnitt als rauschfrei klassifiziert, andernfalls als verrauscht.

Wenn in Schritt 146 festgestellt wird, daß kein markanter Suchausschnitt gefunden wurde, oder wenn in Schritt 146 festgestellt wird, daß ein markanter Suchausschnitt gefunden wurde und dieser Suchausschnitt in Schritt 148 auf Rauschen getestet wurde, wird anschließend in Schritt 150 die Binärisierungsschwelle erhöht.

Im Anschluß an die Erhöhung der Binärisierungsschwelle in Schritt 150 wird in Schritt 152 überprüft, ob ein markanter und rauschfreier Suchausschnitt gefunden wurde oder ob die Binärisierungsschwelle ihren höchstmöglichen Wert angenommen hat. Falls diese Überprüfung negativ ausfällt, wird eine erneute Schleife ab Schritt 134, in welchem der Kantendivisor wieder auf seinen Anfangswert gesetzt wird, durchlaufen. Andernfalls wird in Schritt 154 der Zähler für die aktuelle Grauwertdarstellung erhöht.

Im Anschluß an die Erhöhung des Zählers für die aktuelle Grauwertdarstellung in Schritt 154 wird in Schritt 156 überprüft, ob ein markanter und rauschfreier Suchabschnitt gefunden wurde oder ob die aktuelle Grauwertdarstellung die letzte, in der in Schritt 104 angefertigten Tabelle enthaltene Grauwertdarstellung ist. Falls diese Überprüfung negativ ausfällt, wird eine erneute Schleife ab Schritt 132, in welchem die Binärisierungsschwelle wieder auf ihren Anfangswert gesetzt und die nächste Grauwertdarstellung geladen wird, durchlaufen.

Sollte sich in Schritt 156 dagegen herausstellen, daß ein markanter und rauschfreier Suchausschnitt gefunden wurde oder daß die letzte, in der in Schritt 104 angefertigten Tabelle enthaltene Grauwertdarstellung erreicht ist, so erfolgt in Schritt 158 eine Klassifizierung der zu erlernenden Darstellung. Die zu erlernende Darstellung wird als binär klassifiziert, wenn ein rauschfreier und markanter Suchausschnitt gefunden wurde. Wurde der Suchausschnitt in Schritt 142 als monochrom eingestuft, so wird die zu erlernende Darstellung ebenfalls als monochrom klassifiziert. Wurde in Schritt 148 der Suchausschnitt als verrauscht eingestuft, so wird die zu erlernende Darstellung in Schritt 158 ebenfalls als verrauscht klassifiziert. Nach Abarbeiten des Schrittes 158 ist der Vorgang 130 des Klassifizierens beendet.

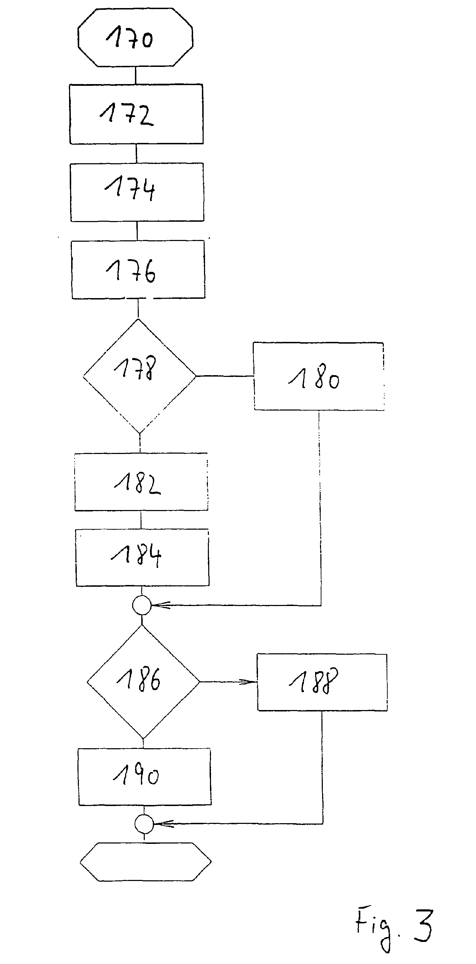

In Fig. 3 ist der Vorgang 170 des Suchens nach einem charakteristischen Suchfenster innerhalb des in Schritt 136 von Fig. 2 generierten Vergleichsausschnittes und nach einem Suchausschnitt innerhalb eines aufgefundenen Suchfensters detaillierter dargestellt. Der in Fig. 3 dargestellte Vorgang 170 entspricht im wesentlichen dem Schritt 140 von Fig. 2.

Zur Suche nach einem charakteristischen Suchfenster innerhalb des Vergleichsausschnittes werden in Schritt 172 zunächst alle innerhalb dieses Vergleichsausschnittes enthaltenen Suchfenster im Hinblick auf deren Markanz untersucht. Je näher das Verhältnis von schwarzen zu weißen Pixeln eines Suchfensters dabei an dem Optimalwert 0,5 liegt, desto höher ist die Markanz des entsprechenden Suchfensters. Die ermittelte Markanz eines jeden Suchfensters wird abgespeichert.

Anschließend werden in Schritt 174 alle Suchfenster, welche eine gewisse Ähnlichkeit aufweisen, ausgefiltert, um ein für den Vergleichsausschnitt charakteristisches Suchfenster zu ermitteln. Dabei werden alle Suchfenster als ähnlich eingestuft, bei welchen eine über einem vorbestimmten Schwellwert liegende Anzahl von Pixeln identisch ist.

Daraufhin wird in Schritt 176 von den verbliebenen charakteristischen Suchfenstern das Suchfenster mit der höchsten Markanz ausgewählt. Sollten mehrere charakteristische Suchfenster mit gleich hoher Markanz gefunden werden, so wird innerhalb der zu erlernenden Darstellung das erste dieser Suchfenster ausgewählt. In der Praxis hat sich nämlich herausgestellt, daß sich die Erkennungsquote des erfindungsgemäßen Erkennungsverfahrens nicht wesentlich erhöht, wenn ein anderes Suchfenster mit gleich hoher Markanz ausgewählt wird. Weiterhin werden in Schritt 176 die Koordinaten des ausgewählten charakteristischen Suchfensters abgespeichert.

In Schritt 178 wird überprüft, ob das in Schritt 176 ausgewählte Suchfenster vorgegebenen Markanzkriterien entspricht. Sollte dies nicht der Fall sein, wird das Suchfenster in Schritt 180 als nicht markant klassifiziert. Sollte dagegen in Schritt 178 festgestellt werden, daß das Suchfenster den vorgegebenen Markanzkriterien entspricht, so wird in Schritt 182 für zwei Suchausschnitte in Gestalt von senkrecht zueinander verlaufenden Geraden und für alle möglichen Positionen dieser beiden Geraden innerhalb des Suchfensters die jeweilige Markanz ermittelt.

Daraufhin werden in Schritt 184 die beiden Suchausschnitte ausgewählt, welche die höchste Markanz aufweisen. Außerdem werden die Anfangskoordinaten der beiden ausgewählten Suchausschnitte innerhalb des Suchfensters abgespeichert. Anschließend wird in Schritt 186 überprüft, ob das ausgewählte Suchfenster und die ausgewählten Suchabschnitte jeweils eine Markanz aufweisen, welche über einem voreingestellten Wert liegen. Sollte dies nicht der Fall sein, so wird die auszuwertende Darstellung in Schritt 188 als monochrom klassifiziert. Andernfalls werden in Schritt 190 die Inhalte der beiden Suchausschnitte abgespeichert. Neben dem Inhalt dieser beiden Suchabschnitte, deren Position innerhalb des Suchfensters dynamisch festgelegt wird, wird noch der Inhalt eines dritten, ortsfesten Suchausschnittes in Gestalt einer Geraden abgespeichert, welche das Suchfenster diagonal durchsetzt. Weiterhin wird in Schritt 190 die auszuwertende Darstellung als Binärdarstellung klassifiziert.

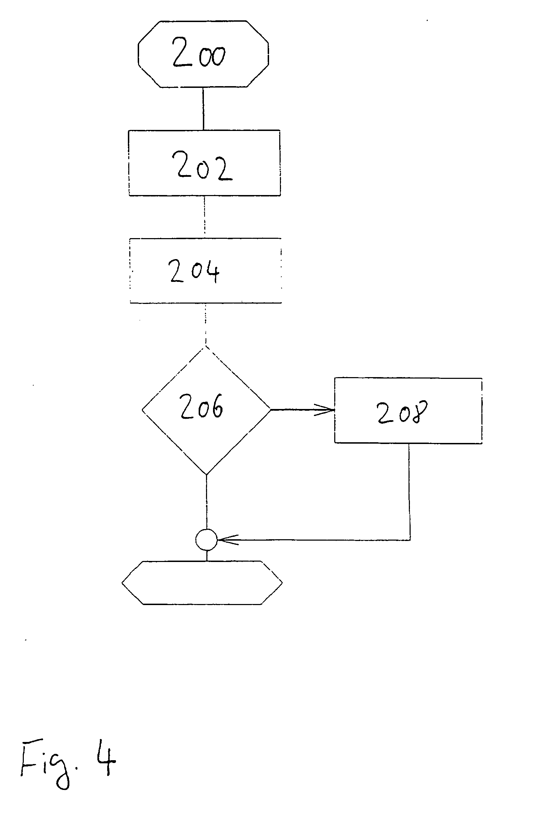

In Fig. 4 ist der Vorgang 200 des Ausfilterns von ähnlichen Suchfenstern detaillierter dargestellt. Dieser Vorgang entspricht dem in Fig. 3 dargestellten Schritt 174.

Zunächst wird in Schritt 202 der Inhalt eines aktuellen Suchfensters für einen Vergleich gespeichert. Anschließend wird in Schritt 204 der Inhalt dieses Suchfenster mit den Inhalten von allen anderen möglichen Suchfenstern innerhalb des Vergleichsausschnittes verglichen. Sofern ähnliche Suchfenster erkannt werden, werden diese ausmaskiert. Sofern eine Überprüfung im Schritt 206 ergibt, daß mindestens ein zu dem aktuellen Suchfenster ähnliches Suchfenster gefunden wurde, wird das aktuelle Suchfenster in Schritt 208 ebenfalls ausmarkiert. Der Vorgang 200 des Auffindens eines für den jeweiligen Vergleichsausschnitt charakteristischen Suchfensters wird so lange fortgeführt, bis alle möglichen Suchfenster innerhalb des Vergleichsausschnittes auf Ähnlichkeit mit anderen Suchfenstern innerhalb des Vergleichsausschnittes untersucht wurden.

Gemäß den in den Fig. 1 bis 4 beschriebenen Verfahrensschritten wird eine zu erlernende Darstellung entweder als Binärdarstellung klassifiziert oder aber als verrauscht oder monochrom. Wird die zu erlernende Darstellung als verrauscht oder monochrom klassifiziert, so wird zur Objekterkennung in einer auszuwertenden Darstellung ein abgespeichertes Grauwert-Histogramm der zu erlernenden Darstellung herangezogen. Im Falle einer Binärdarstellung hingegen erfolgt die Objekterkennung in einer auszuwertenden Darstellung unter Zuhilfenahme der abgespeicherten Suchausschnitte. In Fig. 5 ist die erfindungsgemäße Objekterkennung 220 innerhalb einer auszuwertenden Darstellung detaillierter dargestellt.

In einem ersten Schritt 220 wird von einer Kamera eine analoge Aufnahme erzeugt, welche auf das Vorhandensein des zu erkennenden Objektes überprüft werden soll. Diese analoge Aufnahme wird von einem Framegrabber eines digitalen Signalprozessors in Form einer auszuwertenden monochromen Darstellung der Weiterverarbeitung zur Verfügung gestellt.

In Schritt 224 wird die auszuwertende Darstellung unter Zuhilfenahme von Binominalkoeffizienten geglättet. Weiterhin wird ein Grauwert-Histogramm der auszuwertenden Darstellung generiert.

In Schritt 226 wird überprüft, ob die erlernte Darstellung als Binärdarstellung klassifiziert wurde. Sofern dies nicht der Fall ist, d.h. sofern das gelernte Bild als verrauscht und monochrom klassifiziert wurde, wird in Schritt 228 das Histogramm der auszuwertenden Darstellung mit dem abgespeicherten Histogramm eines Vergleichsausschnittes der gelernten Darstellung verglichen. In Schritt 230 wird das erhaltene Vergleichsergebnis ausgegeben. Sofern das Grauwert-Diagramm der auszuwertenden Darstellung und das Grauwert-Histogramm des Vergleichsausschnittes der gelernten Darstellung eine einstellbare Ähnlichkeit nicht unterschreiten, ist das Vergleichsergebnis positiv, andernfalls negativ.

Sollte hingegen in Schritt 226 gefunden werden, daß die gelernte Darstellung eine Binärdarstellung ist, so wird in Schritt 232 diese Binärdarstellung einer Kantenextrahierung sowie einer Binärisierung unterzogen. Dabei wird der Kantendivisor und die Binärisierungsschwelle verwendet, bei welchen in der zu lernenden Darstellung die Inhalte der Suchausschnitte abgespeichert wurden.

Daraufhin wird ein Schritt 234 nach demjenigen Muster innerhalb der auszuwertenden Darstellung gesucht, welches die größte Übereinstimmung mit der durch die drei gelernten Suchausschnitte definierten Suchstruktur aufweist. Die Koordinaten dieses Musters werden abgespeichert.

Anschließend wird in Schritt 236 ein Vergleichsausschnitt innerhalb der auszuwertenden Darstellung derart festgelegt, daß die Position dieses Vergleichsausschnittes der auszuwertenden Darstellung relativ zu dem aufgefunden Muster mit der Position des Vergleichsfensters der zu erlernenden Darstellung relativ zu den erlernten Suchausschnitten übereinstimmt. Beide Vergleichsausschnitte weisen dieselbe Größe auf.

Daraufhin wird in Schritt 238 der Inhalt des Vergleichsausschnittes der auszuwertenden Darstellung mit dem abgespeicherten Inhalt des Vergleichsausschnittes der erlernten Darstellung verglichen.

Das Vergleichsergebnis wird in Schritt 230 ausgegeben. Dabei ist von einer Erkennung des Objektes innerhalb der auszuwertenden Darstellung auszugehen, wenn zwischen dem Vergleichsausschnitt der auszuwertenden Darstellung und dem korrespondierenden Vergleichsausschnitt der erlernten Darstellung lediglich Abweichungen im Hinblick auf eine vorgegebene Anzahl von Pixeln bestehen.

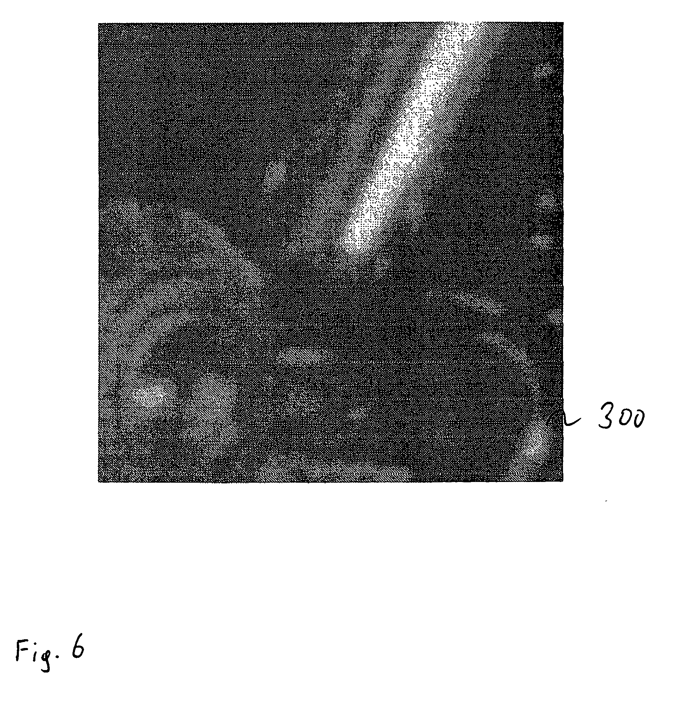

In den Fig. 6 bis 13 ist die Auswahl eines charakteristischen Suchfensters und von markanten Suchausschnitten innerhalb des charakteristisch Suchfensters beispielhaft dargestellt. Die Fig. 6 bis 10 zeigen dabei zunächst den Vorgang der Aufbereitung einer Digitalkamera-Aufnahme 300.

In Fig. 6 ist die Aufnahme 300 einer Digitalkamera dargestellt. Die Aufnahme 300 wurde von einer Digitalkamera mit einem herkömmlichen Videomodul erstellt. Die Auflösung der Aufnahme 300 beträgt 580 Pixel x 380 Bildzeilen. Die Digitalkamera stellt ein monochromes Bild des aufgenommenen Objektes zur Verfügung. Bei dem in Fig. 6 dargestellten Objekt handelt es sich um einen Ausschnitt aus einer Fotografie, welche als zu erlernende Darstellung herangezogen werden soll.

Da die in Fig. 6 dargestellte, zu erlernende Darstellung einen vergleichsweise geringen Kontrast aufweist, wird diese Aufnahme zunächst einer Grauwert-Manipulation unterzogen.

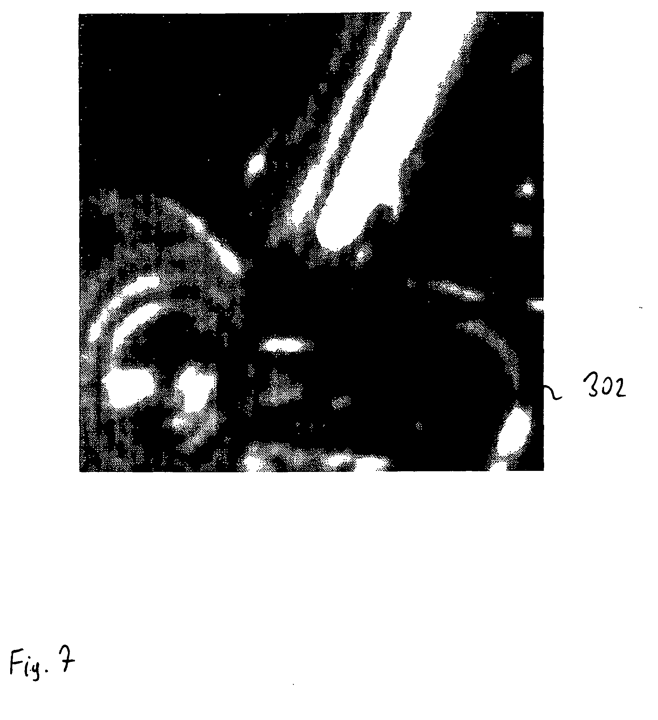

In Fig. 7 ist die einer Grauwert-Spreizung unterzogene, auszuwertende Darstellung 302, welche aus der in Fig. 6 dargestellten Aufnahme 300 hervorgegangen ist, dargestellt. Deutlich zu erkennen ist der verbesserte Kontrast.

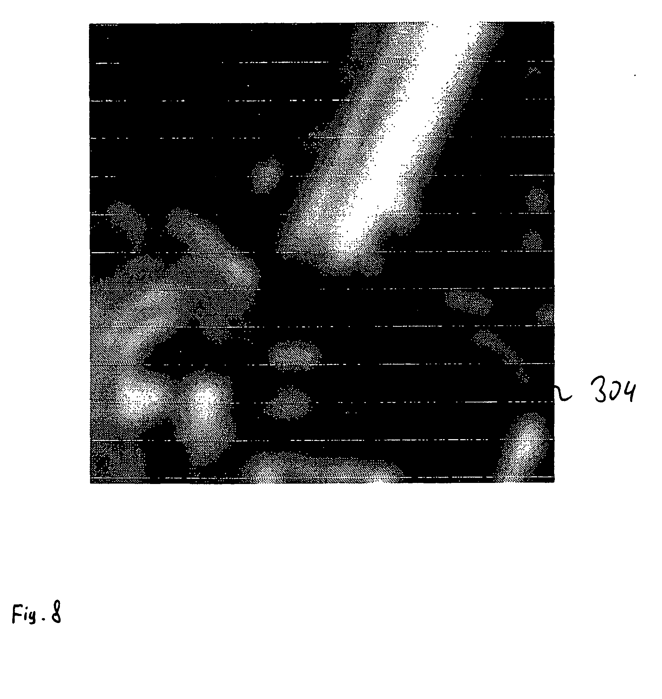

Im Anschluß an die Grauwert-Manipulation wird die auszuwertende Darstellung mit Hilfe von Binominalkoeffizienten geglättet. Die geglättete Darstellung 304 ist in Fig. 8 dargestellt.

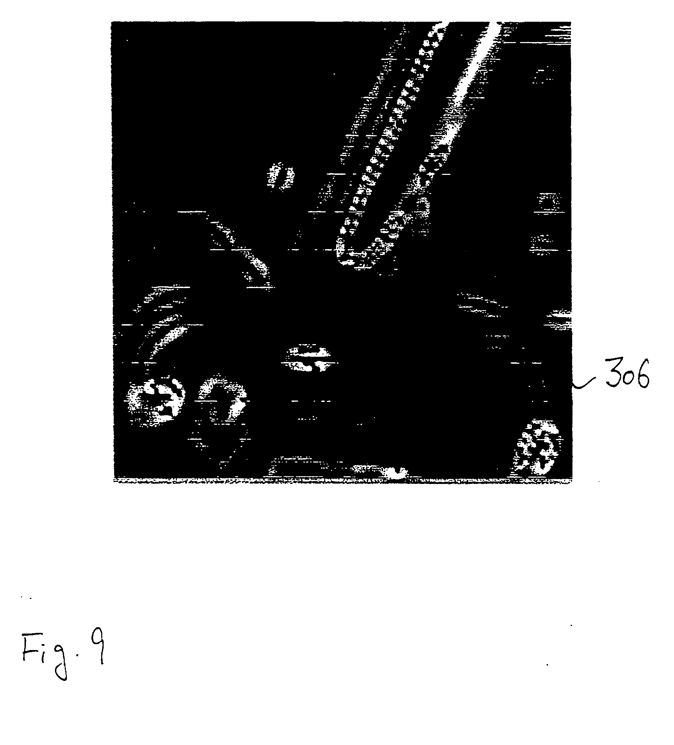

Anschließend wird die geglättete Darstellung einer Kantenextrahierung unterzogen. Unter Zuhilfenahme eines modifizierten Kantenoperators nach Prewitt entsteht aus der in Fig. 8 dargestellten geglätteten Darstellung 304 die in Fig. 9 dargestellte Kantendarstellung 306. Die Kantendarstellung 306 enthält im wesentlichen lediglich noch sehr charakteristische Bildinformationen.

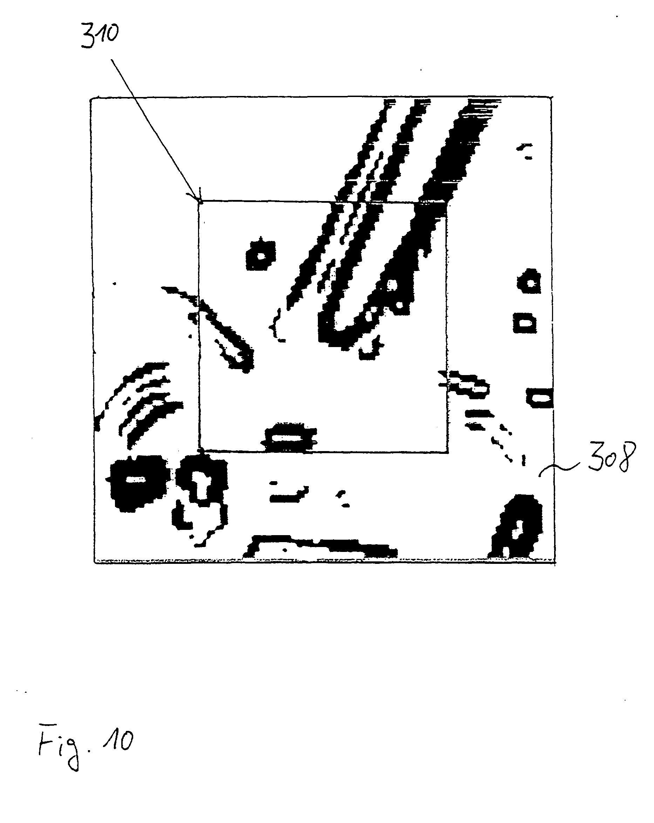

Als letzter Schritt der Aufbereitung der von der Digitalkamera erstellten Aufnahme wird unter Zuhilfenahme einer geeigneten Binärisierungsschwelle aus der in Fig. 9 dargestellten Kantendarstellung 306 die in Fig. 10 gezeigte und zu erlernende Binärdarstellung 308 erzeugt. Diese Binärdarstellung 308 bildet die Grundlage für die Ermittlung eines charakteristischen Suchfensters und von markanten Suchausschnitten.

Die zu erlernende Darstellung 308 von Fig. 10 besitzt eine Größe von 104 x 104 Pixel. In der Mitte der Darstellung 308 wird zunächst ein Vergleichsausschnitt 310 von 56 x 56 Pixeln festgelegt. Innerhalb dieses Vergleichsausschnittes 310 wird nachfolgend ein für den Vergleichsausschnitt 310 charakteristisches Suchfenster ermittelt. Da der seitliche sowie der obere und der untere Abstand des Vergleichsausschnittes 310 von den Seiten der Darstellung 308 einen Abstand von jeweils 24 Pixeln aufweisen, läßt sich der in Fig. 10 dargestellte Vergleichsausschnitt 310 und somit auch ein in diesem Vergleichsausschnitt 310 angeordnetes Suchfenster selbst dann noch sicher innerhalb einer auszuwertenden Darstellung auffinden, wenn das auszuwertende Objekt im Vergleich zu der Darstellung 308 gemäß Fig. 10 um höchstens 24 Pixel nach oben, unten, links oder rechts verschoben ist.

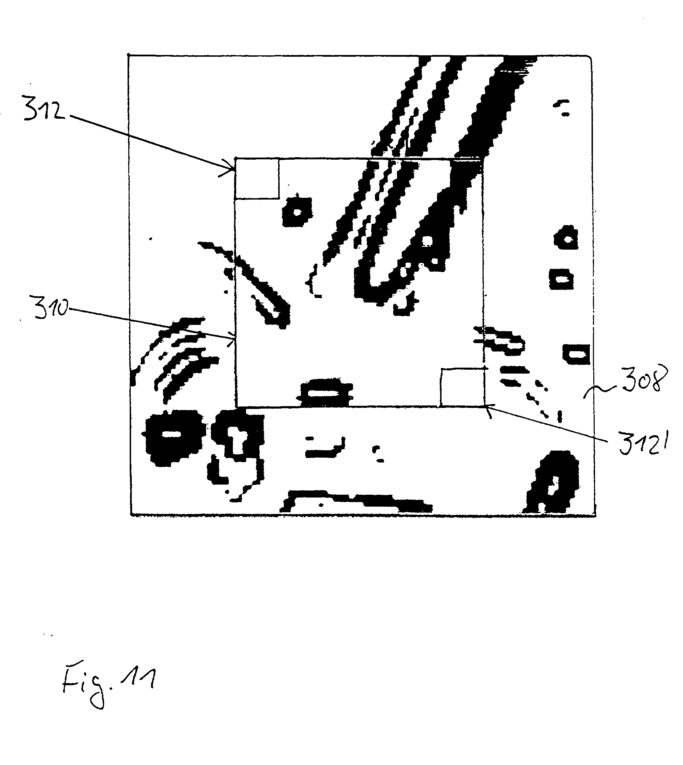

Wie in Fig. 11 dargestellt, wird im Anschluß an das Festlegen eines Vergleichsausschnittes 310 innerhalb der Darstellung 308 ein Suchfenster ermittelt, welches innerhalb des Vergleichsausschnittes 310 lediglich einmal vorkommt und welches daher für den Vergleichsausschnitt charakteristisch ist. Die beiden in Fig. 11 beispielhaft dargestellte Suchfenster 312, 312' besitzen eine Größe von 14 x 14 Pixel. Innerhalb des Vergleichsausschnittes 310, welcher eine Größe von 42 x 42 Pixel besitzt, sind daher 1764 mögliche Suchfenster enthalten. Wie in Zusammenhang mit den Figuren 3 und 4 erläutert, wird nun jedes der 1764 möglichen Suchfenster auf Markanz und Ungleichheit mit den anderen Suchfenstern überprüft.

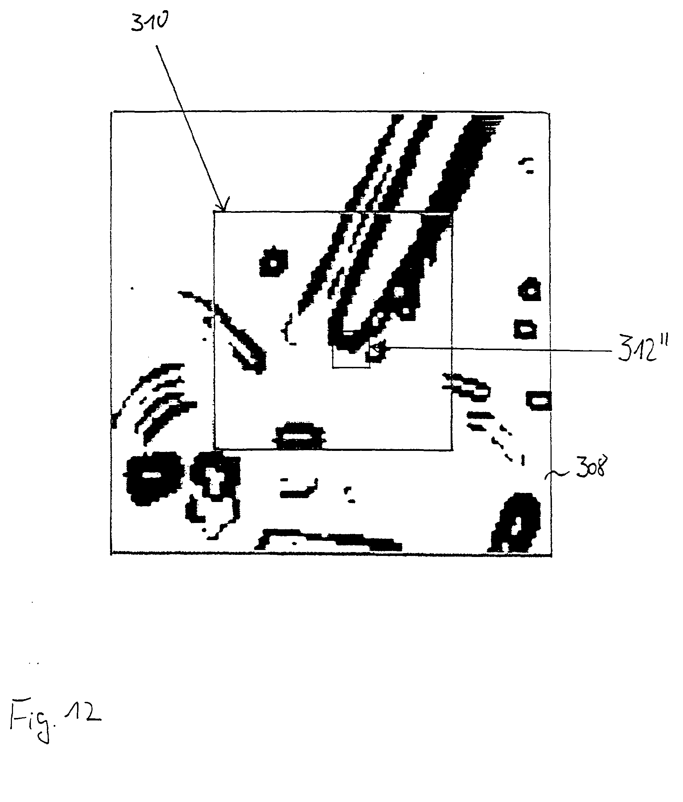

In Fig. 12 ist ein Suchfenster 312" abgebildet, welches eine hohe Markanz aufweist und außerdem nur einmal innerhalb des Vergleichsausschnittes 310 vorkommt. Innerhalb dieses Suchfensters 312" werden nunmehr, wie unter Bezugnahme auf Fig. 3 erläutert, drei markante Suchausschnitte ermittelt.

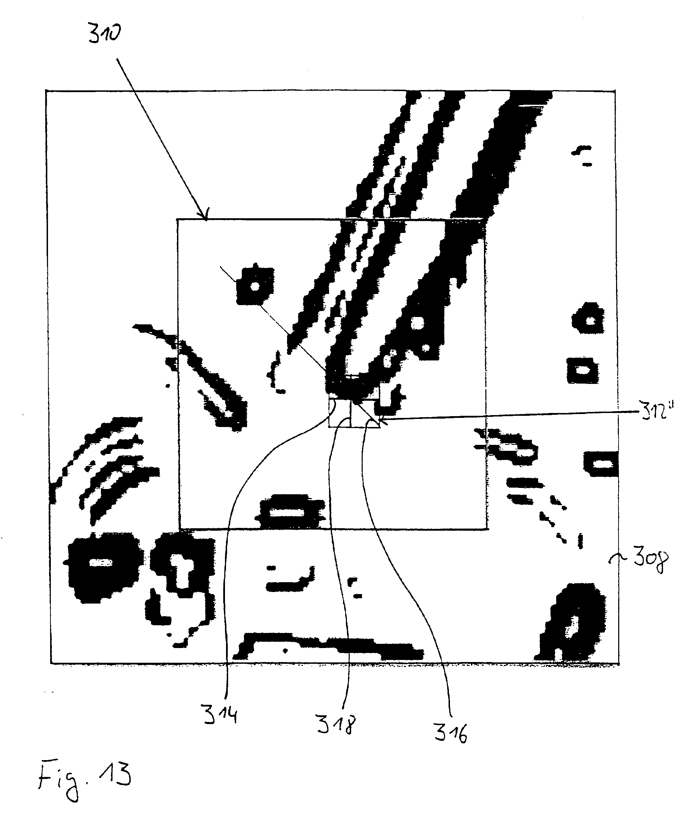

Fig. 13 entspricht Fig. 12, wobei jedoch innerhalb des Suchfensters 312" drei Suchausschnitte 314, 316, 318 in Gestalt von Geraden plaziert sind. Ein diagonal innerhalb des Suchfensters 312" verlaufender Suchausschnitt 316 ist stets starr im Suchfenster 312" verankert. Seine Anfangskoordinaten liegen bei 0, 0 innerhalb des Suchfensters 312". Die Positionen eines zweiten, horizontalen Suchausschnittes 314 und eines dritten, vertikalen Suchausschnittes 318 werden dagegen dynamisch innerhalb des Suchfensters 312 derart gewählt, daß sie eine möglichst hohe Markanz aufweisen. In dem in Fig. 13 dargestellten Beispiel weisen alle drei linienförmigen Suchausschnitte 314, 316, 318 eine annähernd optimale Markanz auf. Dies bedeutet, daß jeder Suchausschnitt 314, 316, 318 jeweils ungefähr zur Hälfte weiße und schwarze Pixel umfaßt.

Sowohl die Anfangskoordinaten der drei Suchausschnitte 314, 316, 318 als auch deren Inhalte werden abgespeichert. Der Inhalt des Vergleichsausschnittes 310 sowie die ermittelten Aufbereitungsparameter werden ebenfalls abgespeichert. Damit ist der Vorgang des Auswertens der zu erlernenden Darstellung abgeschlossen.

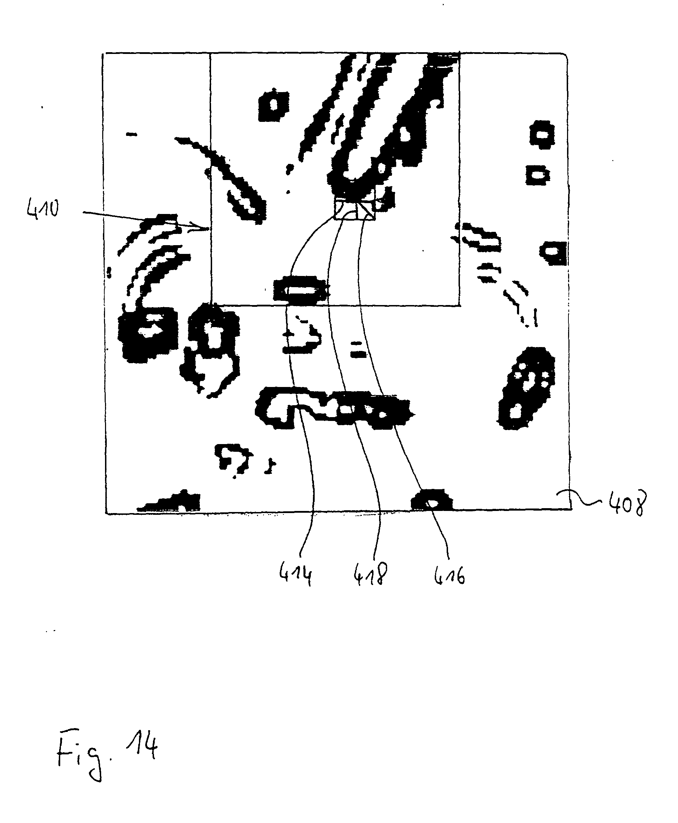

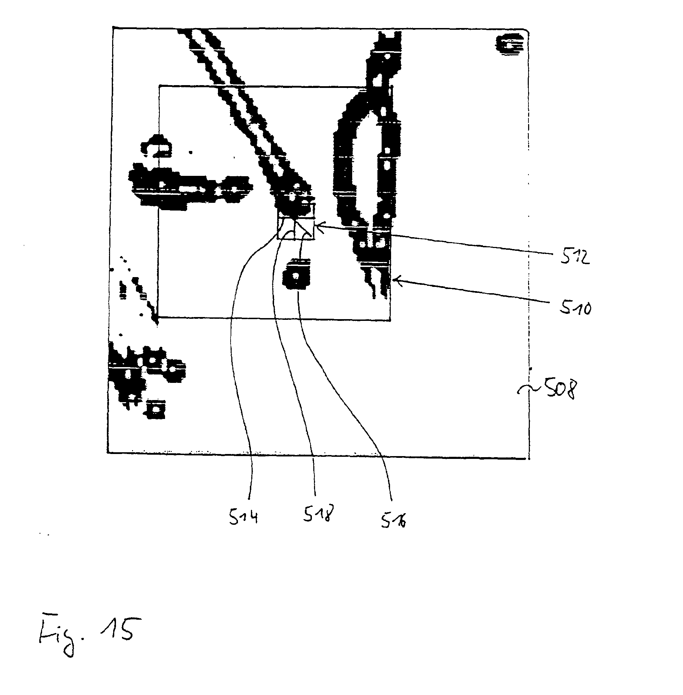

In den Fig. 14 und 15 ist die Objekterkennung unter Zuhilfenahme der wie vorstehend erläutert erlernten Suchausschnitte dargestellt. Fig. 14 zeigt eine Darstellung 408 desselben Objektes, welches z.B. auch in Figur 308 (Fig. 13) dargestellt ist. In der Darstellung 408 gemäß Fig. 14 ist dieses Objekt jedoch geringfügig nach oben verschoben.

Die von einer Digitalkamera aufgenommene und im Hinblick auf die Anwesenheit des Objektes zu untersuchende Darstellung 408 wurde wie die zu erlernende Darstellung ebenfalls einer Grauwert-Manipulation, einer Glättung, einer Kantenextrahierung und einer Binärisierung unterzogen. Dabei wurden diejenigen Aufbereitungsparameter herangezogen, welche bereits bei der Aufbereitung des auszuwertenden Bildes verwendet wurden.

Die auszuwertende Darstellung 408 wird mit Hilfe der erlernten Suchausschnitte daraufhin untersucht, ob sie ein Muster enthält, welches bezüglich Inhalt und Gestalt den drei erlernten Suchausschnitten entspricht. Da die auszuwertende Darstellung 408 tatsächlich ein Muster 414, 416, 418 enthält, welches mit einer Suchstruktur in Gestalt der drei erlernten Suchausschnitte übereinstimmt, wird als nächstes die Position dieses Musters 414, 416, 418 innerhalb der auszuwertenden Darstellung 408 ermittelt. Die Position des Musters 414, 416, 418 gestattet die Ermittlung eines Vergleichsausschnittes 410, dessen relative Lage zum Muster 414, 416, 418 mit der Lage des abgespeicherten Suchausschnittes relativ zu den erlernten Suchausschnitten übereinstimmt.

Nach dem Laden des Vergleichsausschnittes 410 aus der auszuwertenden Darstellung 408 wird der Inhalt dieses Vergleichsausschnittes 410 der auszuwertenden Darstellung 408 mit dem abgespeicherten Inhalt des Vergleichsausschnittes 310 der zu erlernenden Darstellung 308 (Fig. 13) verglichen. Da die beiden Vergleichsausschnitte 410 und 310 einen übereinstimmenden Inhalt aufweisen, wird das zu erkennende Objekt in der auszuwertenden Darstellung 408 erkannt.

Das zu erkennende Objekt kann in der auszuwertenden Darstellung 408 auch dann noch sicher erkannt werden, wenn die Lage des zu erkennenden Objektes in der auszuwertenden Darstellung 408 von der Lage des Objektes in der gelernten Darstellung 308 (Fig. 10 bis 13) lediglich soweit abweicht, daß ein den erlernten Suchausschnitten korrespondierendes Muster noch innerhalb der auszuwertenden Darstellung 408 gefunden werden kann.

In Fig. 15 ist die Situation dargestellt, daß innerhalb der auszuwertenden Darstellung 508 mit Hilfe der drei abgespeicherten Suchausschnitte zwar ein korrespondierendes Muster 514, 516, 518 gefunden werden kann, der Inhalt des innerhalb der auszuwertenden Darstellung 508 angeordneten Vergleichsausschnittes 510 jedoch nicht mit dem gelernten Vergleichsausschnitt 310 (Fig. 13) übereinstimmt. Das zu erkennende Objekt wird folglich in der auszuwertenden Darstellung 508 nicht erkannt.

Das vorstehend beschriebene Verfahren eignet sich insbesondere zur Erkennung von Objekten, welche beispielsweise kontinuierlich an einer Aufnahmevorrichtung zur Erstellung einer Aufnahme der Objekte vorbeibewegt werden. Die zu erkennenden Objekte führen in diesem Fall eine Relativbewegung zur Aufnahmevorrichtung aus. Vorzugsweise wird das erfindungsgemäße Verfahren zur Erkennung von Druckbögen, welche im Bereich einer Sammel- oder Zusammentraglinie angeordnet sind, eingesetzt.

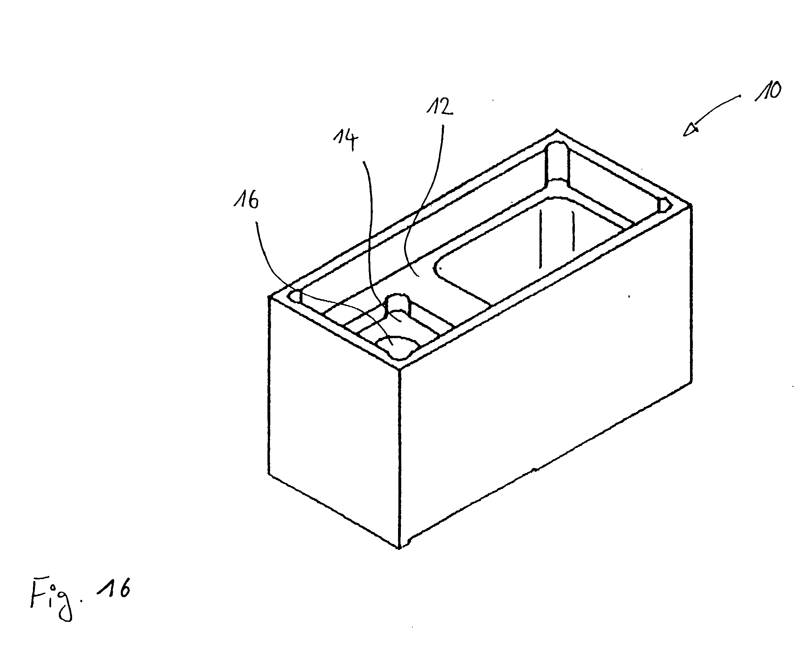

In Fig.16 ist das Gehäuse 10 einer erfindungsgemäßen Digitalkamera dargestellt. Das Gehäuse 10 dient zur Aufnahme sämtlicher optischer und elektronischer Baugruppen der Digitalkamera.

Um die Verwendung der Digitalkamera in einem rauhen industriellen Umfeld zu ermöglichen, ist das Gehäuse 10 aus Maschinenbau-Aluminium gefräst und staubdicht ausgeführt.

Das Gehäuse 10 weist eine als Auflage 12 ausgeführte Aufnahme für eine in Fig. 1 nicht dargestellte Leiterplatte, welche wesentliche elektronische Komponenten der Digitalkamera trägt, auf. Im Bereich dieser Auflage 12 für die Leiterplatte ist eine Aufnahme 14 für eine digitale Aufnahmeeinheit vorgesehen. Im Grund dieser Aufnahme 14 für die digitale Aufnahmeeinheit befindet sich eine hohlzylindrische Öffnung 16. Diese hohlzylindrische Öffnung 16 ist mit einem Innengewinde versehen und dient zur Aufnahme der Abbildungsoptik der Digitalkamera.

In Fig. 14 ist die das in Fig. 1 abgebildete Gehäuse 10 umfassende Digitalkamera 20 in einer Schnittansicht dargestellt.

Auf der Auflage 12 des Gehäuses 10 ist eine Leiterplatte 22 mittels Silikonkleber fixiert. Die Leiterplatte 22 trägt einen digitalen Signalprozessor 24, eine digitale Aufnahmeeinheit 26 in Gestalt eines CMOS-Bildsensors, eine clockserielle digitale RS422-Schnittstelle 28 sowie diverse andere Komponenten wie beispielsweise ein Spannungsversorgungs-IC. Seitlich am Gehäuse 10 ist ein Anschluß 30 für die auf der Leiterplatte 22 angeordnete digitale Schnittstelle 28 vorgesehen. Mit Hilfe des Anschlusses 30 kann die Digitalkamera 20 mit einer Bildverarbeitungseinheit 64 verbunden werden.

Das Gehäuse 10 wird auf einer Oberseite durch einen Gehäusedekkel 32 abgeschlossen. Auf einer Unterseite des Gehäuses 10 ermöglicht ein Abdeckglas 34 die Erfassung eines Objektes 58 durch den CMOS-Bildsensor 26. Gleichzeitig schließt das Abdeckglas 34 das Gehäuse 10 staubdicht ab. Das Objekt 58 ist innerhalb eines Aufnahmebereiches 62 der Digitalkamera 20 auf einer Fördervorrichtung 60 angeordnet.

Der digitale Signalprozessor 24 der Digitalkamera 20 besitzt eine Rechenleistung von mindestens 20 MIPS und ermöglicht die Auswertung von Aufnahmeausschnitten im Bereich von typischerweise 11 x 11 mm (104 Pixel). Durch eine Steigerung der Rechenleistung des digitalen Signalprozessors 24 lassen sich auch größere Aufnahmeausschnitte mit einer erhöhten Anzahl von Pixeln auswerten. Der digitale Signalprozessor 24 dient u.a. der Steuerung der Belichtungszeiten des CMOS-Bildsensors 26 und einer LED-Beleuchtung 36, der Umsetzung der parallelen Bilddaten des CMOS-Bildsensors 26 in ein clockserielles, störunempfindliches Format, der Bildvorbearbeitung, der Histogrammer-stellung sowie der Farb- oder Grauwertmanipulation.

Der in der Aufnahme 14 des Gehäuses 10 angeordnete CMOS-Bildsensor 26 ist für die Bereitstellung von Bildsignalen vorgesehen. Der CMOS-Bildsensor 26 nimmt das Objekt 58 in verschiedenen Auflösungen auf und kann sowohl monochrome Bildsignale als auch Farbbildsignale zur Verfügung stellen.

In der am Grund der Aufnahme 14 für den CMOS-Bildsensor 26 ausgebildeten, kreiszylindrischen Öffnung 16 ist eine Abbildungsoptik 38 in Gestalt einer Linse angeordnet. Die Linse ist innerhalb eines Rohres 40 befestigt, welches über ein Außengewinde mit einem komplementären Innengewinde der Öffnung 16 zusammenwirkt. Über das Gewinde läßt sich zur Fokussierung der Abstand zwischen dem CMOS-Bildsensor 26 bzw. dem Objekt 58 und der Linse 38 einstellen.

Bei dem Rohr 40 handelt es sich um ein M 10 x 0,5 Gewinderohr. Zur Einstellung des Aufnahmeausschnittes wird eine Mehrzahl von derartigen Rohren 40 mit verschiedenen Linsen 38 unterschiedlicher Brennweite bereitgehalten und je nach Anwendung in die Öffnung 16 des Gehäuses 10 eingesetzt.

Eine wesentliche Komponente der Digitalkamera 20 ist die in das Gehäuse integrierte diffuse grüne LED-Beleuchtung 36 zur Beleuchtung des aufzunehmenden Objektes. Die grüne LED-Beleuchtung 36 ist nicht streng monochrom wie beispielsweise ein grüner Laser, aber der geringe Rotlichtanteil im Spektrum der grünen LED-Beleuchtung 36 ergänzt sich in synergistischer Weise mit der hohen Rotlichtempfindlichkeit des CMOS-Bildsensors 26. In der Praxis hat sich daher die Kombination von diffuser LED-Beleuchtung 36 und CMOS-Bildsensor 26 als optimal herausgestellt.

Die LED-Beleuchtung 36 umfaßt eine Leiterplatte 42 sowie eine Mehrzahl von Lichtquellen 44, 46, 48, 50 in Gestalt von 5 mm LEDs. Die Leiterplatte 42 ist mit Hilfe eines Silikonklebers 52, 54 im Gehäuse 10 fixiert.

Die Leiterplatte 42 mit den darauf angeordneten LEDs 44, 46, 48, 50 schließt mit der Aufnahmeebene einen Winkel von ungefähr 45° ein. Diese geneigte Ausrichtung der LED-Beleuchtung 36 relativ zur Aufnahmeebene schließt ungewollte Reflexionen aus und ist optimal in Bezug auf das mit der angestrebten Miniaturisierung der Digitalkamera 20 einhergehende geringe Platzangebot innerhalb des Gehäuses 10.

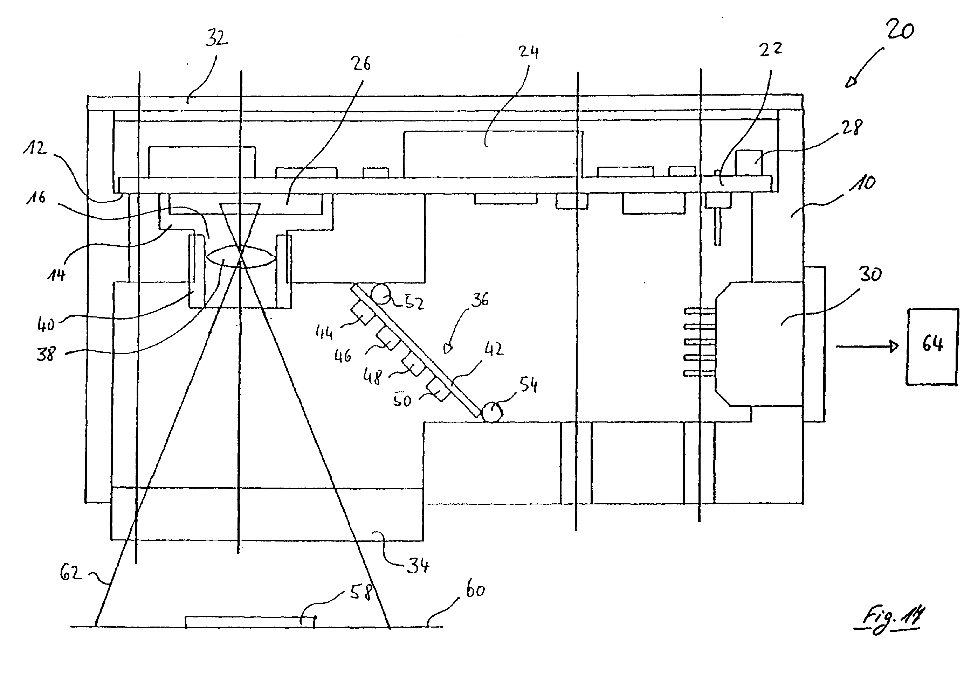

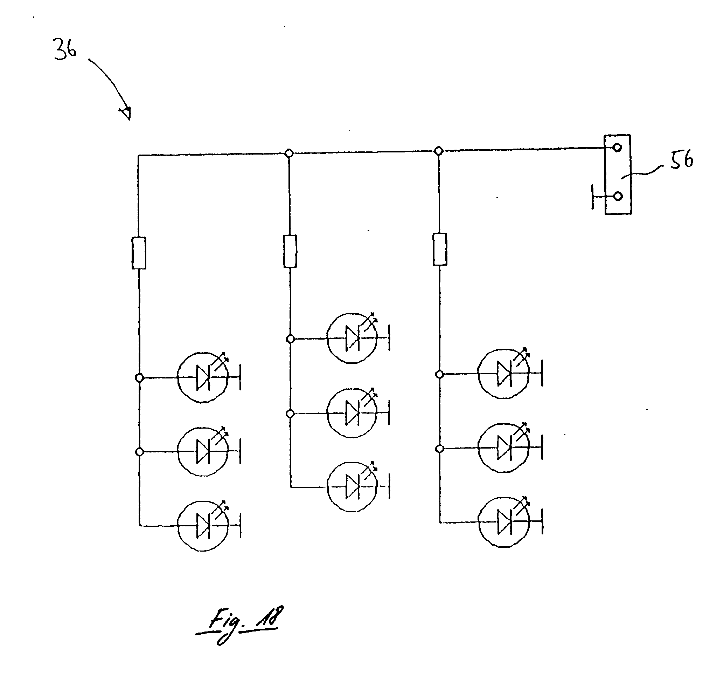

In Fig. 18 ist der schematische Aufbau der LED-Beleuchtung 36 von Fig. 17 dargestellt. Die LED-Beleuchtung 36 umfaßt insgesamt neun grüne diffuse 5 mm LEDs, von denen jeweils drei parallel geschaltet sind. Die drei Äste aus jeweils drei parallel geschalteten LEDs sind ebenfalls parallel geschaltet. Über einen Kontakt 56 wird eine elektrische Verbindung zu der in Figur 2 dargestellten Leiterplatte 22 hergestellt. Die geometrische Anordnung der neun LEDs auf der in Figur 2 dargestellten Leiterplatte 42 entspricht im wesentlichen der in Figur 3 dargestellten schaltungstechnischen Anordnung. Dies bedeutet, daß die Gesamtheit der neun in Figur 3 dargestellten Leuchtdioden im wesentlichen ein Rechteck definieren.

Die in den Figuren 16 bis 18 skizzierte erfindungsgemäße Digitalkamera 20 eignet sich aufgrund ihrer geringen Abmessungen von lediglich 70,0 mm x 32,0 mm x 38,0 mm für eine Vielzahl industrieller Anwendungen. Alle empfindlichen Komponenten der Digitalkamera sind innerhalb des robusten Gehäuses 10 vor mechanischen Beschädigungen geschützt, so daß sich die in den Figuren 1 bis 3 skizzierte Digitalkamera insbesondere zur Anwendung im Bereich von beispielsweise Sammel- oder Zusammentraglinien von Druckbögen mit einer Vielzahl von rotierenden Teilen eignet. Im Bereich dieser Sammel- oder Zusammentraglinien herrschen extrem eingeschränkte Platzverhältnisse. So beträgt der typische Abstand der Unterseite des in Figur 2 dargestellten Abdeckglases 34 von den Druckbögen in der Regel nur 25 bis 27 mm.

## Patentansprüche

1. Automatisiertes Verfahren zur Erkennung von ruhenden oder bewegten Objekten wie Bildern, Texten oder Gegenständen, enthaltend die Schritte:
- Bereitstellen (102) einer zu erlernenden, digitalen Darstellung (308) des Objektes oder eines Teiles des Objektes;
- Auswählen eines Suchfensters (312) innerhalb der zu erlernenden Darstellung (308) oder innerhalb eines Ausschnittes (310) der zu erlernenden Darstellung (308),
**dadurch gekennzeichnet ,**
**dass** ein Suchfenster ausgewählt wird, welches innerhalb der zu erlernenden Darstellung (308) oder innerhalb des Ausschnittes (310) markant ist; und
**dass** innerhalb des Suchfensters mindestens ein für die Objekterkennung heranzuziehender Suchausschnitt (314, 316, 318) ausgewählt wird, welcher als Gerade, als zwei senkrecht zueinander verlaufende Geraden oder als Ring ausgebildet ist,
wobei innerhalb einer auszuwertenden, digitalen Darstellung (408) nach einem dem mindestens einen Suchausschnitt (314, 316, 318) entsprechenden Muster (414, 416, 418) gesucht wird,
wobei die Position des Suchausschnittes (314, 316, 318) innerhalb des Suchfensters (312) und/oder die geometrische Gestalt des Suchausschnittes (314, 316, 318) fest vorgegeben oder dynamisch in Abhängigkeit vom Inhalt des Suchfensters (312) festgelegt werden.

2. Verfahren nach Anspruch 1,
**dadurch gekennzeichnet , dass**
ein Suchfenster (312) innerhalb der zu erlernenden Darstellung (308) oder innerhalb eines Ausschnittes (310) der zu erlernenden Darstellung (308) ausgewählt wird, welches innerhalb der zu erlernenden Darstellung (308) oder innerhalb des Ausschnittes (310) nur einmal vorkommt.

3. Verfahren nach Anspruch 1 und/oder 2,
**dadurch gekennzeichnet , dass**
die Position und/oder die geometrische Gestalt des Suchausschnittes (314, 316, 318) im Hinblick auf eine hohe Markanz des Suchausschnittes (314, 316, 318) innerhalb des Suchfensters (312) festgelegt werden.

4. Verfahren nach einem der Ansprüche 1 bis 3,
**dadurch gekennzeichnet , dass**
die Position des Suchausschnittes (316) innerhalb des Suchfensters (312) und/oder die geometrische Gestalt des Suchausschnittes (316) unabhängig vom Inhalt des Suchfensters (312) fest vorgegeben werden.

5. Verfahren nach einem der Ansprüche 1 bis 4,
**dadurch gekennzeichnet , dass**
innerhalb des Suchfensters (312) zwei senkrecht zueinander verlaufende Suchausschnitte (314, 318) in Gestalt von jeweils einer Geraden vorgesehen werden und deren Positionen innerhalb des Suchfensters (312) dynamisch im Hinblick auf eine hohe Markanz der beiden Suchausschnitte (314, 318) festgelegt werden.

6. Verfahren nach einem der Ansprüche 1 bis 5,
**dadurch gekennzeichnet , dass** ein das Suchfenster (312) umgebender und innerhalb der zu erlernenden Darstellung (308) angeordneter Vergleichsausschnitt (310) abgespeichert wird.

7. Verfahren nach Anspruch 6,
**dadurch gekennzeichnet , dass** innerhalb
der auszuwertenden Darstellung (408) ein Vergleichsausschnitt (410) ermittelt wird, dessen Position relativ zu dem aufgefundenen Muster (414, 416, 418) mit der Position des abgespeicherten Vergleichsausschnitts (310) relativ zu dem mindestens einen Suchausschnitt (314, 316, 318) übereinstimmt.

8. Verfahren nach Anspruch 7,
**dadurch gekennzeichnet , dass**
der Inhalt des Vergleichsausschnitts (410) der auszuwertenden Darstellung (408) mit dem Inhalt des Vergleichsausschnitts (310) der zu erlernenden Darstellung (308) verglichen wird.

9. Verfahren nach einem der Ansprüche 1 bis 8,
**dadurch gekennzeichnet , dass**
die zu erlernende Darstellung (308) und/oder die auszuwertende Darstellung (408) einer Bildaufbereitung unterzogen werden.

10. Verfahren nach Anspruch 9,
**dadurch gekennzeichnet , dass**
bei der Bildaufbereitung eine Kantenextrahierung (136, 232) durchgeführt wird.

11. Verfahren nach Anspruch 9 oder 10,
**dadurch gekennzeichnet , dass**
bei der Bildaufbereitung eine Binärisierung (136, 232) durchgeführt wird.

12. Verfahren nach einem der Ansprüche 9 bis 11,
**dadurch gekennzeichnet , dass** bei der Bildaufbereitung eine Grauwert-Manipulation (104) und/oder eine Glättung (136, 224) durchgeführt wird.

13. Verfahren nach einem der Ansprüche 1 bis 12,
**dadurch gekennzeichnet , dass**
ein Histogramm der zu erlernenden Darstellung (308) angefertigt wird (120, 136), welches für den Fall, dass kein Suchausschnitt zur Verfügung steht, zur Objekterkennung herangezogen wird.

14. Verfahren nach einem der Ansprüche 1 bis 13,
**dadurch gekennzeichnet , dass**
die zu erkennenden Objekte eine Relativbewegung zu einer Aufnahmevorrichtung für die zu erkennenden Objekte ausführen.

15. Verfahren nach Anspruch 14,
**dadurch gekennzeichnet , dass**
das Verfahren zur Erkennung von Druckbögen, welche im Bereich einer Sammel- oder Zusammentraglinie angeordnet sind, eingesetzt wird.

16. Digitalkamera (20) mit Muster-Erkennungsmitteln zur Durchführung eines Verfahrens gemäß einem oder mehreren der Ansprüche 1 bis 16 mit einem Gehäuse (10) innerhalb dessen ein digitales Aufnahmesystem (24, 26, 40, 38) angeordnet ist, und einer im grünen Wellenlängenbereich emittierenden Lichtquelle (36), die zumindest einen Teil eines Aufnahmebereiches (62) der Digitalkamera (20) ausleuchtet und die innerhalb des Gehäuses (10) oder außen am Gehäuse (10) befestigt ist.

17. Digitalkamera nach Anspruch 16,
**dadurch gekennzeichnet , dass**
die Lichtquelle (36) innerhalb des Gehäuses (10) angeordnet ist.

18. Digitalkamera nach Anspruch 16 oder 17,
**dadurch gekennzeichnet , dass** die Lichtquelle (36) eine diffuse Lichtquelle ist.

19. Digitalkamera nach einem der Ansprüche 16 bis 18,
**dadurch gekennzeichnet , dass** die Lichtquelle (36) eine ringförmige oder eine rechteckige Ausdehnung aufweist.

20. Digitalkamera nach einem der Ansprüche 16 bis 19,
**dadurch gekennzeichnet , dass** die Lichtquelle (36) eine LED oder ein LED-array (44, 46, 48, 50) umfasst.

21. Digitalkamera nach einem der Ansprüche 16 bis 20,
**dadurch gekennzeichnet , dass** die Lichtquelle (36) relativ zur Aufnahmeebene geneigt ist.

22. Digitalkamera nach einem der Ansprüche 16 bis 21,
**dadurch gekennzeichnet , dass** das digitale Aufnahmesystem eine digitale Aufnahmeeinheit (26) umfasst.

23. Digitalkamera nach Anspruch 22,
**dadurch gekennzeichnet , dass**
die digitale Aufnahmeeinheit (26) einen CMOS-Bildsensor oder einen CCD-Bildsensor umfasst.

24. Digitalkamera nach einem der Ansprüche 16 bis 23,
**dadurch gekennzeichnet , dass**
das digitale Aufnahmesystem einen digitalen Signalprozessor (24) umfasst.

25. Digitalkamera nach einem der Ansprüche 16 bis 24,
**dadurch gekennzeichnet , dass**
das digitale Aufnahmesystem eine Abbildungsoptik (38) umfasst.

26. Digitalkamera nach Anspruch 25,
**dadurch gekennzeichnet , dass**
die Abbildungsoptik (36) innerhalb eines mit einem Außengewinde versehenen Rohres (40) angeordnet ist und das Rohr (40) durch das Außengewinde mit einem korrespondierenden Innengewinde des Gehäuses (10) zur Fokussierung zusammenwirkt.

27. System zur Erkennung bewegter Objekte (58) wie Bilder, Texte oder Gegenstände mit mindestens einer Digitalkamera (20) gemäß einem der Ansprüche 17 bis 27 und einer Bildverarbeitungseinheit (64).

28. System nach Anspruch 27,
**dadurch gekennzeichnet , dass**
eine Fördervorrichtung (60) zum Fördern der Objekte (58) relativ zu der mindestens einen Digitalkamera (20) vorhanden ist.

29. System nach Anspruch 28,
**dadurch gekennzeichnet , dass**
die Fördervorrichtung (60) zum Fördern von Druckbögen ausgestaltet ist.

30. System nach einem der Ansprüche 27 bis 29,
**dadurch gekennzeichnet , dass** zwei oder mehr Digitalkameras (20) vorhanden sind.

31. System nach Anspruch 30,
**dadurch gekennzeichnet , dass**
die Kameras (20) auf unterschiedliche Bereiche desselben Objektes (58) oder auf unterschiedliche Objekte (58) ausgerichtet sind.

32. System nach einem der Ansprüche 27 bis 31,
**dadurch gekennzeichnet , dass**
der Abstand zwischen der Kamera (20) und dem Objekt (58) weniger als 5 cm beträgt.

## Claims

1. An automated method for the identification of stationary or moving objects such as images, texts or items, comprising the steps:
- preparation (102) of a digital representation (308) to be learned of the object or part of the object;
- selection of a search window (312) within the representation (308) to be learned or within a section (310) of the representation (308) to be learned,
**characterised**
**in that** a search window is selected which is prominent within the representation (308) to be learned or within the section (310); and
**in that** within the search window at least one search section (314, 316, 318) to be used for the object identification is selected which is in the form of a straight line, two straight lines running at right angles to one another or a ring,
a search being carried out within a digital representation (408) to be evaluated for a pattern (414, 416, 418) corresponding to the at least one search section (314, 316, 318),
the position of the search section (314, 316, 318) within the search window (312) and/or the geometric shape of the search section (314, 316, 318) being fixedly predetermined or defined dynamically in dependence on the content of the search window (312).

2. A method according to Claim 1,
**characterised in that** a search window (312) within the representation (308) to be learned or within a section (310) of the representation (308) to be learned is selected which occurs only once within the representation (308) to be learned or within the section (310).

3. A method according to Claim 1 and/or 2,
**characterised in that** the position and/or the geometric shape of the search section (314, 316, 318) are defined with respect to a high prominence of the search section (314, 316, 318) within the search window (312).

4. A method according to one of Claims 1 to 3,
**characterised in that** the position of the search section (316) within the search window (312) and/or the geometric shape of the search section (316) are fixedly predetermined irrespective of the content of the search window (312).

5. A method according to one of Claims 1 to 4,
**characterised in that** two search sections (314, 318) running at right angles to one another, each in the shape of a straight line, are provided within the search window (312), and their positions within the search window (312) are defined dynamically with respect to a high prominence of the two search sections (314, 318).

6. A method according to one of Claims 1 to 5,
**characterised in that** a comparison section (310) surrounding the search window (312) and disposed within the representation (308) to be learned is stored.

7. A method according to Claim 6,
**characterised in that**, within the representation (408) to be evaluated, a comparison section (410) is ascertained, the position of which relative to the found pattern (414, 416, 418) matches the position of the stored comparison section (310) relative to the at least one search section (314, 316, 318).

8. A method according to Claim 7,
**characterised in that** the content of the comparison section (410) of the representation (408) to be evaluated is compared with the content of the comparison section (310) of the representation (308) to be learned.

9. A method according to one of Claims 1 to 8,
**characterised in that** the representation (308) to be learned and/or the representation (408) to be evaluated are subjected to image processing.

10. A method according to Claim 9,
**characterised in that** edge extraction (136, 232) is carried out during the image processing.

11. A method according to Claim 9 or 10,
**characterised in that** binarisation (136, 232) is carried out during the image processing.

12. A method according to one of Claims 9 to 11,
**characterised in that** grey scale value manipulation (104) and/or smoothing (136, 224) is carried out during the image processing.

13. A method according to one of Claims 1 to 12,
**characterised in that** a histogram of the representation (308) to be learned is produced (120, 136), which is used for the object identification in the event that no search section is available.

14. A method according to one of Claims 1 to 13,
**characterised in that** the objects to be identified perform a relative movement with respect to a recording device for the objects to be identified.

15. A method according to Claim 14,
**characterised in that** the method is used to identify printed sheets which are arranged in the region of a collecting or collating line.

16. A digital camera (20) with pattern-identifying means for implementing a method according to one or more of Claims 1 to 16 [sic], comprising a housing (10), within which a digital recording system (24, 26, 40, 38) is arranged, and a light source (36) emitting in the green wavelength range, which illuminates at least a part of a recording area (62) of the digital camera (20) and is fixed within the housing (10) or externally on the housing (10).

17. A digital camera according to Claim 16,
**characterised in that** the light source (36) is arranged within the housing (10).

18. A digital camera according to Claim 16 or 17,
**characterised in that** the light source (36) is a diffuse light source.

19. A digital camera according to one of Claims 16 to 18,
**characterised in that** the light source (36) has an annular or rectangular extent.

20. A digital camera according to one of Claims 16 to 19,
**characterised in that** the light source (36) comprises an LED or an LED array (44, 46, 48, 50).

21. A digital camera according to one of Claims 16 to 20,
**characterised in that** the light source (36) is inclined relative to the recording plane.

22. A digital camera according to one of Claims 16 to 21,
**characterised in that** the digital recording system comprises a digital recording unit (26).

23. A digital camera according to Claim 22,
**characterised in that** the digital recording unit (26) comprises a CMOS image sensor or a CCD image sensor.

24. A digital camera according to one of Claims 16 to 23,
**characterised in that** the digital recording system comprises a digital signal processor (24).

25. A digital camera according to one of Claims 16 to 24,
**characterised in that** the digital recording system comprises an imaging optical system (38).

26. A digital camera according to Claim 25,
**characterised in that** the imaging optical system (36) [sic, recte (38)] is arranged within a tube (40) provided with an external thread, and the tube (40) cooperates by means of the external thread with a corresponding internal thread of the housing (10) for focusing.

27. A system for the identification of moving objects (58) such as images, texts or items, comprising at least one digital camera (20) according to one of Claims 17 to 27 [sic] and an image processing unit (64).

28. A system according to Claim 27,
**characterised in that** there is a conveyor device (60) for conveying the objects (58) relative to the at least one digital camera (20).

29. A system according to Claim 28,
**characterised in that** the conveyor device (60) is designed for conveying printed sheets.

30. A system according to one of Claims 27 to 29,
**characterised in that** two or more digital cameras (20) are present.

31. A system according to Claim 30,
**characterised in that** the cameras (20) are aligned with different areas of the same object (58) or with different objects (58).

32. A system according to one of Claims 27 to 31,
**characterised in that** the distance between the camera (20) and the object (58) is less than 5 cm.

## Revendications

1. Procédé automatisé pour la reconnaissance d'éléments immobiles ou déplacés tels que des images, des textes ou des objets, comprenant les étapes suivantes :
- fourniture (102) d'une représentation numérique (308) à apprendre de l'élément ou d'une partie de l'élément ;
- sélection d'une fenêtre de recherche (312) à l'intérieur de la représentation à apprendre (308) ou à l'intérieur d'un extrait (310) de la représentation à apprendre (308),
**caractérisé en ce qu'**une fenêtre de recherche est sélectionnée, qui est caractéristique à l'intérieur de la représentation à apprendre (308) ou à l'intérieur de l'extrait (3 10) ; et **en ce que**, à l'intérieur de la fenêtre de recherche, au moins un extrait de recherche (314, 316, 318) à consulter pour la reconnaissance de l'élément est sélectionné, qui est réalisé en tant que droite, en tant que deux droites s'étendant perpendiculairement l'une à l'autre ou en tant que cercle ;
où un modèle (414, 416, 418) correspondant à l'extrait de recherche au moins au nombre d'un (314, 316, 318) est recherché à l'intérieur d'une représentation numérique à examiner ;
la position de l'extrait de recherche (314, 316, 318) à l'intérieur de la fenêtre de recherche (312) et/ou la forme géométrique de l'extrait de recherche (314, 316, 318) étant prédéterminées de façon fixe ou étant définies de façon dynamique en fonction du contenu de la fenêtre de recherche (312).

2. Procédé selon la revendication 1, **caractérisé en ce qu'**une fenêtre de recherche (312) est sélectionnée à l'intérieur de la représentation à apprendre (308) ou à l'intérieur d'un extrait (310) de la représentation à apprendre (308), qui ne se présente qu'une seule fois à l'intérieur de la représentation à apprendre (3 0 8) ou à l'intérieur de l'extrait (310).

3. Procédé selon l'une quelconque des revendications 1 et/ou 2, **caractérisé en ce que** la position et/ou la forme géométrique de l'extrait de recherche (314, 316, 318) sont définies sur la base d'une propriété caractéristique élevée de l'extrait de recherche (314, 316, 318) à l'intérieur de la fenêtre de recherche (312).

4. Procédé selon l'une quelconque des revendications 1 à 3, **caractérisé en ce que** la position de l'extrait de recherche (316) à l'intérieur de la fenêtre de recherche (312) et/ou la forme géométrique de l'extrait de recherche (316) sont prédéterminées de façon fixe indépendamment du contenu de la fenêtre de recherche (312).

5. Procédé selon l'une quelconque des revendications 1 à 4, **caractérisé en ce que** deux extraits de recherche (314, 418) s'étendant perpendiculairement l'un à l'autre respectivement sous la forme d'une droite sont prévus à l'intérieur de la fenêtre de recherche (312) et leurs positions à l'intérieur de la fenêtre de recherche (312) sont définies de façon dynamique sur la base d'une propriété caractéristique élevée des deux extraits de recherche (314, 318).

6. Procédé selon l'une quelconque des revendications 1 à 5, **caractérisé en ce qu'**un extrait de comparaison (310) entourant la fenêtre de recherche (312) et agencé à l'intérieur de la représentation à apprendre (308) est mémorisé.

7. Procédé selon la revendication 6, **caractérisé en ce qu'**un extrait de comparaison (410) est déterminé à l'intérieur de la représentation à examiner (408), dont la position par rapport au modèle identifié (414, 416, 418) correspond à la position de l'extrait de comparaison mémorisé (310) par rapport à l'extrait de recherche au moins au nombre d'un (314, 316, 318).

8. Procédé selon la revendication 7, **caractérisé en ce que** le contenu de l'extrait de comparaison (410) de la représentation à examiner (408) est comparé avec le contenu de l'extrait de comparaison (310) de la représentation à apprendre (308).

9. Procédé selon l'une quelconque des revendications 1 à 8, **caractérisé en ce que** la représentation à apprendre (308) et/ou la représentation à examiner (408) sont soumises à une préparation d'image.

10. Procédé selon la revendication 9, **caractérisé en ce qu'**une extraction de contours (136, 232) est exécutée lors de la préparation de l'image.

11. Procédé selon l'une quelconque des revendications 9 ou 10, **caractérisé en ce qu'**une numérisation (136, 232) est exécutée lors de la préparation de l'image.

12. Procédé selon l'une quelconque des revendications 9 à 11, **caractérisé en ce qu'**une manipulation des valeurs de gris (104) et/ou un lissage (136, 224) sont exécutés lors de la préparation de l'image.

13. Procédé selon l'une quelconque des revendications 1 à 12, **caractérisé en ce qu'**un histogramme de la représentation à apprendre (308) est produit (120, 136), lequel est consulté aux fins de la reconnaissance de l'élément dans le cas où aucun extrait de recherche n'est disponible.

14. Procédé selon l'une quelconque des revendications 1 à 13, **caractérisé en ce que** les éléments à reconnaître exécutent un mouvement relatif en direction d'un dispositif de saisie pour les éléments à reconnaître.

15. Procédé selon la revendication 14, **caractérisé en ce que** le procédé est utilisé pour la reconnaissance de feuilles imprimées qui sont agencées dans la zone d'une ligne de collecte ou d'assemblage.

16. Appareil photographique numérique (20) ayant des moyens de reconnaissance de modèle aux fins de la mise en oeuvre d'un procédé selon l'une ou plusieurs des revendications 1 à 16, ayant un boîtier (10) à l'intérieur duquel est agencé un système de saisie numérique (24, 26, 40, 38) et une source lumineuse (36) émettant dans la zone de longueur d'onde verte qui éclaire au moins une partie d'une zone de saisie (62) de l'appareil photographique numérique (20) et qui est fixée à l'intérieur du boîtier (10) ou à l'extérieur sur le boîtier (10).

17. Appareil photographique numérique selon la revendication 16, **caractérisé en ce que** la source lumineuse (36) est agencée à l'intérieur du boîtier (10).

18. Appareil photographique numérique selon l'une quelconque des revendications 16 ou 17, **caractérisé en ce que** la source lumineuse (36) est une source lumineuse diffuse.

19. Appareil photographique numérique selon l'une quelconque des revendications 16 à 18, **caractérisé en ce que** la source lumineuse (36) présente une étendue circulaire ou rectangulaire.

20. Appareil photographique numérique selon l'une quelconque des revendications 16 à 19, **caractérisé en ce que** la source lumineuse (36) comprend une DEL ou un réseau de DEL (44, 46, 48, 50).

21. Appareil photographique numérique selon l'une quelconque des revendications 16 à 20, **caractérisé en ce que** la source lumineuse (36) est inclinée par rapport au plan de prise.

22. Appareil photographique numérique selon l'une quelconque des revendications 16 à 21, **caractérisé en ce que** le système de prise numérique comprend une unité de prise numérique (26).

23. Appareil photographique numérique selon la revendication 22, **caractérisé en ce que** l'unité de prise numérique (26) comprend un détecteur d'image CMOS ou un détecteur d'image CCD.

24. Appareil photographique numérique selon l'une quelconque des revendications 16 à 23, **caractérisé en ce que** le système de prise numérique comprend un processeur de signal numérique (24).

25. Appareil photographique numérique selon l'une quelconque des revendications 16 à 24, **caractérisé en ce que** le système de prise numérique comprend une optique de reproduction (38).

26. Appareil photographique numérique selon la revendication 25, **caractérisé en ce que** l'optique de reproduction (36) est agencée à l'intérieur d'un tube (40) muni d'un filetage extérieur et **en ce que** le tube (40) coopère par le biais du filetage extérieur avec un filetage intérieur correspondant du boîtier (10) aux fins de la focalisation.

27. Système de reconnaissance d'éléments déplacés (58) tels que des images, des textes ou des objets ayant au moins un appareil photographique numérique (20) selon l'une des revendications 17 à 27 et une unité de traitement d'image (64).

28. Système selon la revendication 27, **caractérisé en ce qu'**un dispositif de transport (60) est présent pour le transport des éléments (58) par rapport à l'appareil photographique numérique (20) au moins au nombre d'un.

29. Système selon la revendication 28, **caractérisé en ce que** le dispositif de transport (60) est conçu pour le transport de feuilles imprimées.

30. Système selon l'une quelconque des revendications 27 à 29, **caractérisé en ce que** deux appareils photographiques numériques (20) ou davantage sont présents.

31. Système selon la revendication 30, **caractérisé en ce que** les appareils photographiques (20) sont dirigés vers des zones différentes du même élément (58) ou vers des éléments (58) différents.

32. Système selon l'une quelconque des revendications 27 à 31, **caractérisé en ce que** la distance entre l'appareil photographique (20) et l'élément (58) est inférieure à 5 cm.
